(19)

Europäisches Patentamt

European Patent Office

Office européen des brevets

(11) **EP 4 692 901 A1**

(12) **EUROPEAN PATENT APPLICATION**
published in accordance with Art. 153(4) EPC

(43) Date of publication:
**11.02.2026 Bulletin 2026/07**

(21) Application number: **24795555.2**

(22) Date of filing: **22.02.2024**

(51) International Patent Classification (IPC):
**G02B 30/26** (2020.01)  **G02B 27/28** (2006.01)
**G02B 27/01** (2006.01)

(52) Cooperative Patent Classification (CPC):
**G02B 27/01; G02B 27/28; G02B 30/26**

(86) International application number:
**PCT/CN2024/078126**

(87) International publication number:
**WO 2024/222167 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.04.2023  CN 202310485863**

(71) Applicant: **Shenzhen Yinwang Intelligent Technologies Co., Ltd.**
**Shenzhen, Guangdong 518110 (CN)**

(72) Inventors:
• **WANG, Jinlei**
  **Shenzhen, Guangdong 518129 (CN)**
• **LI, Weiwu**
  **Shenzhen, Guangdong 518129 (CN)**
• **CHANG, Zeshan**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **IMAGE GENERATION APPARATUS, DISPLAY DEVICE, AND VEHICLE**

(57)  This application relates to the field of light display technologies, and provides an image generation apparatus (1), a display device (100), and a transportation means (200), to improve stereoscopic display effect of the image generation apparatus. The image generation apparatus (1) includes an image source module (2), a light adjustment apparatus (3), and a projection lens (4). The image source module (2) is configured to: form, based on image data, imaging light (P1) that includes image information, and project the imaging light (P1) onto the light adjustment apparatus (3). The imaging light (P1) includes first imaging sub-light (P11) and second imaging sub-light (P12), and the first imaging sub-light (P11) and the second imaging sub-light (P12) are respectively used to form a left-eye image and a right-eye image for implementing stereoscopic display. The light adjustment apparatus (3) is configured to split the imaging light (P1), and after split, the first imaging sub-light (P11) and the second imaging sub-light (P12) in the imaging light (P 1) are projected onto the projection lens (4) in different directions. The projection lens (4) is configured to project the first imaging sub-light (P11) and the second imaging sub-light (P12). The image generation apparatus (1) may be used in the display device (100) and the transportation means (200).

FIG. 3

## Description

This application claims priority to Chinese Patent Application No. 202310485863.1, filed with the China National Intellectual Property Administration on April 28, 2023 and entitled "IMAGE GENERATION APPARATUS, DISPLAY DEVICE, AND TRANSPORTATION MEANS", which is incorporated herein by reference in its entirety.

## TECHNICAL FIELD

This application relates to the field of light display technologies, and in particular, to an image generation apparatus, a display device, and a transportation means.

## BACKGROUND

A head-up display (head-up display, HUD) apparatus may be used in a vehicle, and is configured to project driving-related information, such as instrument information and navigation information, onto a driver's front field of view. In this way, the driver can know the driving-related information without looking down to observe a dashboard or a navigation device in a driving process. This improves driving safety.

To better integrate the information projected by the head-up display apparatus with a driving scenario, a stereoscopic display technology that is based on a binocular disparity principle, especially a naked-eye stereoscopic display technology, starts to be applied to the head-up display apparatus. However, the head-up display apparatus in a related technology still has room for improvement in stereoscopic display effect.

## SUMMARY

Embodiments of this application provide an image generation apparatus, a display device, and a transportation means, to improve stereoscopic display effect of the image generation apparatus.

To achieve the foregoing objectives, the following technical solutions are used in embodiments of this application.

According to a first aspect, an embodiment of this application provides an image generation apparatus. The image generation apparatus includes an image source module, a light adjustment apparatus, and a projection lens.

The image source module is configured to: form, based on image data, imaging light that includes image information, and project the imaging light onto the light adjustment apparatus, where the imaging light includes first imaging sub-light and second imaging sub-light, and the first imaging sub-light and the second imaging sub-light are respectively used to form a left-eye image and a right-eye image for implementing stereoscopic display.

The light adjustment apparatus is configured to split the imaging light, and after split, the first imaging sub-light and the second imaging sub-light in the imaging light are projected onto the projection lens in different directions. The projection lens is configured to project the first imaging sub-light and the second imaging sub-light.

The image generation apparatus of the foregoing structure can implement a stereoscopic display function. In addition, the light adjustment apparatus is disposed on a side that is of the projection lens and that is close to the image source module, and is located at a position close to the image source module. Therefore, the light adjustment apparatus is close to a forming position of the imaging light, so that the light adjustment apparatus has good beam splitting effect for the imaging light, and the image generation apparatus can achieve good stereoscopic display effect.

In addition, a beam splitting object of the light adjustment apparatus in the image generation apparatus is the imaging light formed by the image source module, so that problems such as an image resolution loss, image distortion, and crosstalk between the left-eye image and the right-eye image caused by the diffusion screen can be avoided, to improve stereoscopic display effect.

In addition, the image generation apparatus can achieve the foregoing technical effect by adding only the light adjustment apparatus. A structure is simple, costs are low, and impact on costs and a volume of the image generation apparatus is small.

In some embodiments, the image source module includes a light source, a liquid crystal on silicon, and a polarizing beam splitter. The light source is configured to provide an illumination light beam projected onto the polarizing beam splitter. The polarizing beam splitter is configured to: perform polarization splitting on the illumination light beam to form a first light beam, and project the first light beam onto the liquid crystal on silicon through the light adjustment apparatus, where a polarization direction of the first light beam is a first polarization direction.

The liquid crystal on silicon is configured to: form the imaging light, and project the imaging light onto the light adjustment apparatus, where a polarization direction of the imaging light is a second polarization direction, and the first polarization direction and the second polarization direction are perpendicular to each other.

The light adjustment apparatus is configured to split the imaging light, and after split, the first imaging sub-light and the second imaging sub-light in the imaging light are projected onto the polarizing beam splitter in different directions, and are projected onto the projection lens through the polarizing beam splitter.

The image generation apparatus provided in this embodiment of this application is applicable to an application scenario in which the liquid crystal on silicon is used. In the image generation apparatus in which the liquid crystal on silicon is used, the light adjustment apparatus is disposed between the liquid crystal on silicon and the polarizing beam splitter, and is located at a position close to the liquid crystal on silicon. Therefore, the light adjustment apparatus is close to the forming position of the imaging light, so that the light adjustment apparatus has good beam splitting effect for the imaging light, and the image generation apparatus can achieve good stereoscopic display effect. In addition, the liquid crystal on silicon has advantages such as a small volume, high resolution, high light effective utilization, and low power consumption.

In some embodiments, the light adjustment apparatus is a polarization light adjustment element, and the polarization light adjustment element is configured to: split polarized light in the second polarization direction, and allow polarized light in the first polarization direction to pass through.

In the image generation apparatus provided in this embodiment of this application, the light adjustment apparatus is the polarization light adjustment element. The polarization light adjustment element performs beam splitting only on the imaging light, and allows the first light beam to pass through normally. In this design, a problem that stereoscopic display effect deteriorates due to impact of the light adjustment apparatus on the first light beam can be avoided, to improve stereoscopic display effect of the image generation apparatus.

In some embodiments, the polarization light adjustment element includes a polarization grating or a polarization lens. The polarization grating and the polarization lens have advantages such as good beam splitting effect, a simple structure, low costs, and a small occupied volume. On the basis of ensuring that the image generation apparatus can achieve the foregoing technical effect, the polarization grating and the polarization lens have small impact on the costs and the volume.

In some embodiments, the light adjustment apparatus is a first lens array, and the first lens array is configured to: split the imaging light through refraction, and refract the first light beam that is projected from the polarizing beam splitter onto the liquid crystal on silicon.

The image source module further includes a second lens array, where the second lens array is disposed between the light source and the polarizing beam splitter, and is configured to compensate for an optical path difference generated due to refraction of the first light beam by the first lens array.

In this design, on the basis that the image generation apparatus can implement the stereoscopic display function, the second lens array may refract the illumination light beam (including the first light beam), to compensate for the optical path difference generated due to refraction of the first light beam by the first lens array, so as to improve quality of a light beam incident to the liquid crystal on silicon. In this way, imaging effect of the liquid crystal on silicon is improved, so that display effect of the image generation apparatus is improved.

In some embodiments, the first lens array includes a plurality of first lenses arranged in an array, where an aperture of the first lens is D1, and a focal length of the first lens is F1. The second lens array includes a plurality of second lenses arranged in an array, where an aperture of the second lens is D2, and a focal length of the second lens is F2.

The first lens and the second lens satisfy: $D1/D2=F1/F2$.

When the first lens array and the second lens array use the foregoing design, the second lens array can compensate for the optical path difference generated due to refraction of the first light beam by the first lens array, to improve quality of the light beam incident to the liquid crystal on silicon. In this way, imaging effect of the liquid crystal on silicon is improved, so that display effect of the image generation apparatus is improved.

In some embodiments, the first lens array and the second lens array are of a same structure. In this design, the second lens array can compensate for the optical path difference generated due to refraction of the first light beam by the first lens array, and good compensation effect can be obtained, to improve quality of the light beam incident to the liquid crystal on silicon. In this way, imaging effect of the liquid crystal on silicon is improved, so that display effect of the image generation apparatus is improved.

In some embodiments, both the first lens array and the second lens array are micro lens arrays or lenticular lens arrays. The micro lens array and the lenticular lens array have advantages such as good optical performance, a simple structure, low costs, and a small occupied volume. On the basis of ensuring that the image generation apparatus can achieve the foregoing technical effect, the micro lens array and the lenticular lens array have small impact on the costs and the volume.

In some embodiments, the image source module includes a light source, a reflection prism, and a digital micromirror device. The light source is configured to provide an illumination light beam projected onto the reflection prism. The reflection prism is configured to: reflect the illumination light beam to form a first light beam projected onto the digital micromirror device; and transmit the imaging light formed by the digital micromirror device.

The digital micromirror device is configured to: modulate the first light beam based on the image data to form the imaging light; and project the imaging light onto the reflection prism, to project the imaging light onto the projection lens through the reflection prism.

The light adjustment apparatus is disposed between the reflection prism and the digital micromirror device, or between the reflection prism and the projection lens.

The image generation apparatus provided in this embodiment of this application is applicable to an application scenario in which the digital micromirror device is used. In the image generation apparatus in which the digital micromirror device is used, the light adjustment apparatus is disposed between the reflection prism and the digital micromirror device, or between the reflection prism and the projection lens, and is located at a position close to the digital micromirror device. Therefore, the light adjustment apparatus is close to a forming position of the imaging light, so that the light adjustment apparatus has good beam splitting effect for imaging light, and the image generation apparatus can achieve good stereoscopic display effect. In addition, the digital micromirror device is a polarization-independent display chip, has good adaptability, has a wider application range, is insensitive to wavelengths, has stable image quality, has high image definition, and has excellent contrast and uniformity.

In addition, the reflection prism is disposed to play a role of turning a light beam in the image source module, so that disposition positions of the light source, the digital micromirror device, and the projection lens in the image generation apparatus can be optimized. In this way, a structure of the image generation apparatus is more compact, which facilitates a miniaturization design.

In addition, the light adjustment apparatus may be disposed between the reflection prism and the digital micromirror device, or may be disposed between the reflection prism and the projection lens. A disposition position is flexible and adaptability is good.

In some embodiments, the light adjustment apparatus is disposed between the reflection prism and the digital micromirror device, and the illumination light beam is polarized light in a first polarization direction.

The light adjustment apparatus includes a polarization light adjustment element and a polarization conversion element. The polarization light adjustment element is configured to: split polarized light in a second polarization direction, and allow polarized light in the first polarization direction to pass through. The first polarization direction and the second polarization direction are perpendicular to each other.

The polarization conversion element is disposed on a side that is of the polarization light adjustment element and that is close to the digital micromirror device, and is configured to convert the imaging light into polarized light in the second polarization direction.

In the image generation apparatus provided in this embodiment of this application, the illumination light beam is polarized light in the first polarization direction, and the first light beam formed by the reflection prism is also polarized light in the first polarization direction. The light adjustment apparatus can allow the first light beam to pass through normally, and performs beam splitting only on the imaging light, so that a problem that stereoscopic display effect deteriorates due to impact of the light adjustment apparatus on the first light beam can be avoided, to improve display effect of the image generation apparatus.

In some embodiments, the polarization light adjustment element includes a polarization grating or a polarization lens. The polarization grating and the polarization lens have advantages such as good beam splitting effect, a simple structure, low costs, and a small occupied volume. On the basis of ensuring that the image generation apparatus can achieve the foregoing technical effect, the polarization grating and the polarization lens have small impact on the costs and the volume.

In some embodiments, the polarization conversion element is a quarter-wave plate. The quarter-wave plate has advantages such as a simple structure, low costs, and a small occupied volume. On the basis of ensuring that the image generation apparatus can achieve the foregoing technical effect, the quarter-wave plate has small impact on the costs and the volume.

In some embodiments, the light adjustment apparatus is disposed between the reflection prism and the projection lens, and the light adjustment apparatus includes at least one of a polarization grating, a polarization lens, a slit grating, a micro lens array, and a lenticular lens array. The image generation apparatus provided in this embodiment of this application is applicable to scenarios in which illumination light beams are natural light and polarized light, and a plurality of types of optical devices may be selected for the light adjustment apparatus, to have a wide range of application, and facilitate improvement of the image generation apparatus.

In some embodiments, the image source module includes a light source and a liquid crystal display. The light source is configured to provide an illumination light beam projected onto the liquid crystal display. The liquid crystal display is configured to: modulate the illumination light beam based on the image data to form the imaging light, and project the imaging light onto the light adjustment apparatus.

The light adjustment apparatus is disposed between the liquid crystal display and the projection lens, and the light adjustment apparatus includes one of a polarization grating, a polarization lens, a slit grating, a micro lens array, and a lenticular lens array.

The image generation apparatus provided in this embodiment of this application is applicable to an application scenario in which the liquid crystal display is used. In the image generation apparatus in which the liquid crystal display is used, the light adjustment apparatus is disposed between the liquid crystal display and the projection lens, and is located at a position close to the liquid crystal display. Therefore, the light adjustment apparatus is close to a forming position of the imaging light, so that the light adjustment apparatus has good beam splitting effect for the imaging light, and the image generation apparatus can achieve good stereoscopic display effect. In addition, the liquid crystal display is of a transmissive display structure, and has advantages such as a simple optical path, easy implementation, and low costs.

In some embodiments, the imaging light includes at least two imaging sub-light pairs, each imaging sub-light pair includes the first imaging sub-light and the second imaging sub-light, and each of the imaging sub-light pairs is separately used to form one stereoscopic displaying viewing point.

The light adjustment apparatus is configured to split the imaging light, and after split, different imaging sub-light pairs are projected onto the projection lens in different directions, and first imaging sub-light and second imaging sub-light in a same imaging sub-light pair are projected onto the projection lens in different directions.

In the image generation apparatus provided in this embodiment of this application, at least two stereoscopic display viewing points can be formed at different positions, so that a stereoscopic display viewing angle of the image generation apparatus can be expanded.

In addition, according to a second aspect, an embodiment of this application provides a display device. The display device includes a processor and the image generation apparatus according to any one of the embodiments of the first aspect, and the processor is configured to control the image generation apparatus to form imaging light.

In some embodiments, the display device further includes a diffusion screen and a first reflection element. The diffusion screen is disposed on a light output side of the image generation apparatus, and is configured to: receive the imaging light and perform imaging. The first reflection element is configured to reflect imaging information on the diffusion screen to a preset position.

In addition, according to a third aspect, an embodiment of this application provides a transportation means. The transportation means includes the display device according to the embodiment of the second aspect, and the display device is mounted on the transportation means.

In some embodiments, the transportation means further includes a second reflection element, the display device is configured to project imaging light onto the second reflection element, and the second reflection element is configured to reflect the imaging light.

Technical effects that can be achieved by the display device and the transportation means provided in embodiments of this application are the same as technical effects that can be achieved by the image generation apparatus in any one of the foregoing embodiments. Details are not described herein again.

**BRIEF DESCRIPTION OF DRAWINGS**

FIG. 1 is a diagram of a structure of a stereoscopic display device according to a related technology;
FIG. 2 is a diagram of a structure of another stereoscopic display device according to a related technology;
FIG. 3 is a diagram of a structure of an image generation apparatus according to an embodiment of this application;
FIG. 4 is a diagram of a structure of an image source module in FIG. 3;
FIG. 5 is a diagram of a structure of an image generation apparatus in which a liquid crystal on silicon is used according to an embodiment of this application;
FIG. 6 is a diagram of a structure of a polarizing beam splitter in FIG. 5;
FIG. 7 is a diagram of a structure of another image generation apparatus in which a liquid crystal on silicon is used according to an embodiment of this application;
FIG. 8 is a diagram of a structure of still another image generation apparatus in which a liquid crystal on silicon is used according to an embodiment of this application;
FIG. 9 is a diagram of a principle of optical path compensation according to an embodiment of this application;
FIG. 10 is a diagram of a structure of an image generation apparatus in which a digital micromirror device is used according to an embodiment of this application;
FIG. 11 is a diagram of a structure of a light adjustment apparatus in FIG. 10;
FIG. 12 is a diagram of a structure of an image generation apparatus in which a liquid crystal display is used according to an embodiment of this application;
FIG. 13A to FIG. 13D are diagrams of different application scenarios of an image generation apparatus according to this application;
FIG. 14 is a diagram of a structure of a display device according to an embodiment of this application;
FIG. 15 is a circuit schematic of a display device according to an embodiment of this application;
FIG. 16 is a diagram of a structure of a transportation means according to an embodiment of this application; and
FIG. 17 is a functional diagram of a transportation means according to an embodiment of this application.

**DESCRIPTION** OF EMBODIMENTS

The following describes the technical solutions in embodiments of this application with reference to the accompanying drawings in embodiments of this application. It is clear that the described embodiments are merely some but not all of embodiments of this application.

Terms such as "first" and "second" mentioned below in embodiments of this application are merely used for ease of description, and shall not be understood as an indication or implication of relative importance or implicit indication of a quantity of indicated technical features. Therefore, a feature limited by "first", "second", or the like may explicitly or implicitly indicate that one or more such features are included. In the descriptions of this application, unless otherwise stated, "a plurality of" means two or more than two.

In embodiments of this application, "up", "down", "left", and "right" are not limited to definitions relative to directions in which components are schematically placed in accompanying drawings. It should be understood that these directional terms may be relative concepts used for relative description and clarification, and may change correspondingly based on a change of a direction in which a component in an accompanying drawing is placed.

In embodiments of this application, unless otherwise specified in the context, in the entire specification and claims, the term "include" is interpreted as "open and inclusive", that is, "include, but not limited to". In the description of the specification, terms such as "an embodiment", "some embodiments", "example embodiments", "examples", or "some examples" are intended to indicate that specific features, structures, materials, or features related to embodiments or examples are included in at least one embodiment or example of this application. The foregoing schematic representations of the terms do not necessarily refer to a same embodiment or example. Further, the particular feature, structure, material, or characteristic may be included in any one or more embodiments or examples in any appropriate manner.

As used in this specification, "about", "generally", or "approximately" includes the stated values and the average values within an acceptable deviation range of a particular value, where the acceptable deviation range is determined by a person of ordinary skill in the art by considering an error (namely, a limitation of a measurement system) related to measurement being discussed and measurement of a specific quantity.

As used in this specification, "parallel", "perpendicular to", and "equal to" include described cases and similar cases. A range of a similar case is in an acceptable deviation range. The acceptable deviation range is determined by a person of ordinary skill in the art by considering an error (namely, a limitation of a measurement system) related to measurement being discussed and measurement of a specific quantity. For example, "parallel" includes "absolutely parallel" and "approximately parallel", and an acceptable deviation range of "approximately parallel" may be, for example, a deviation within 5°. "Perpendicular to" includes "absolutely perpendicular to" and "approximately perpendicular to", and an acceptable deviation range of "approximately perpendicular to" may also be, for example, a deviation within 5°. "Equal to" includes "absolutely equal to" and "approximately equal to". An acceptable deviation range of "approximately equal to" may be that, for example, a difference between two equal objects is less than or equal to 5% of either of the two objects.

It should be understood that, when a layer or an element is referred to as on another layer or substrate, the layer or element may be directly on the another layer or substrate, or an intermediate layer may exist between the layer or element and the another layer or substrate.

In embodiments of this application, an example implementation is described with reference to a sectional view and/or a plane diagram and/or an equivalent circuit schematic that are/is used as idealized example accompanying drawings. In the accompanying drawings, for clarity, thicknesses of layers and regions are enlarged. There, a change in a shape in the accompanying drawings due to, for example, manufacturing techniques and/or tolerances may be envisaged. Therefore, example implementations should not be construed as being limited to a shape of a region shown herein, but rather include shape deviations due to, for example, manufacturing. For example, an etching region shown as a rectangle typically has a bending feature. Therefore, the regions shown in the accompanying drawings are essentially examples, and their shapes are not intended to show actual shapes of regions of a device, and are not intended to limit a scope of the example implementations.

To improve display effect, some display devices have a stereoscopic (3D) display function. Currently, the stereoscopic display function of the display device may be implemented by using a beam splitting stereoscopic display technology that is based on a binocular disparity principle. That is, based on a visual difference between binoculars (left eye and right eye) of an observer, a left-eye image that may be seen by the left eye of the observer and a right-eye image that may be seen by the right eye of the observer are separately presented. The left-eye image and the left-eye image are mixed in a brain of the observer, to achieve stereoscopic display visual effect.

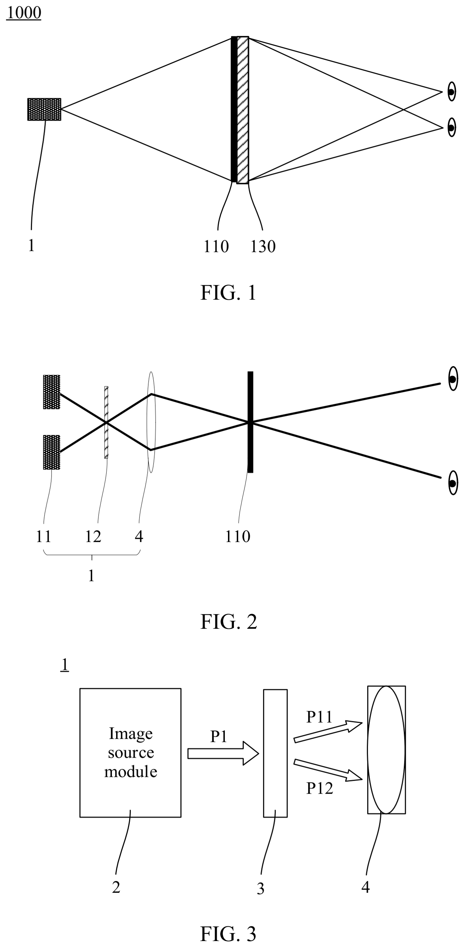

FIG. 1 is a diagram of a structure of a stereoscopic display device 1000 according to a related technology. As shown in FIG. 1, the stereoscopic display device 1000 includes an image generation apparatus (picture generation unit, PGU) 1, a diffusion screen 110, and a light adjustment element 130. The image generation apparatus 1 is configured to: generate a binocular interleaved image for stereoscopic display, and project the binocular interleaved image onto the diffusion screen 110. The light adjustment element 130 is disposed on a side that is of the diffusion screen 110 and that is away from the image generation apparatus 1, that is, a light output side of the diffusion screen 110, and performs beam splitting on the binocular interleaved image on the diffusion screen 110, to form a left-eye image and a right-eye image that are spatially distributed. When the left eye of an observer observes the left-eye image and the right eye of the observer observes the right-eye image, stereoscopic display visual effect can be achieved.

FIG. 2 is a diagram of a structure of another stereoscopic display device 1000 according to a related technology. As shown in FIG. 2, the stereoscopic display device 1000 includes an image generation apparatus 1 and a diffusion screen 110. The image generation apparatus 1 includes a display chip 12, two groups of directional backlights 11 with different light output directions, and a projection lens. In the image generation apparatus 1 of the stereoscopic display device 1000, a left-eye image and a right-eye image that are used to implement stereoscopic display are formed through time-division modulation by controlling switches of two groups of directional backlights 11 and by using a time-division high-refresh-rate feature of the display chip 12. The image generation apparatus 1 separately projects the left-eye image and the right-eye image onto the diffusion screen 110 through the projection lens 4, so that the diffusion screen 110 can quickly and alternately display the left-eye image and the right-eye image. When the left eye of an observer observes the left-eye image and the right eye of the observer observes the right-eye image, stereoscopic display visual effect can be achieved.

Although the stereoscopic display devices 1000 in the foregoing related technologies may implement a stereoscopic display function, the stereoscopic display devices 1000 still have some disadvantages. For example, in the stereoscopic display device 1000 shown in FIG. 1, scattering effect of the diffusion screen 110 and a structural feature of the diffusion screen 110 may lead to problems such as a resolution loss and image distortion in a displayed image, and may further lead to generation of crosstalk between the left-eye image and the right-eye image used for stereoscopic display, which affects stereoscopic display effect. In the stereoscopic display device 1000 shown in FIG. 2, the diffusion screen 110 may also affect stereoscopic display effect. In addition, because a quantity of backlights is increased and a high requirement is imposed on a refresh rate of the display chip 12, the stereoscopic display device 1000 in FIG. 2 has problems of a large volume and high costs.

Based on this, an embodiment of this application provides an image generation apparatus. As shown in FIG. 3, the image generation apparatus 1 includes an image source module 2, a light adjustment apparatus 3, and a projection lens 4. The image source module 2 is configured to: form, based on image data, imaging light P1 that includes image information, and project the imaging light P1 onto the light adjustment apparatus 3. The image data is image data for implementing stereoscopic display based on a binocular disparity principle, and the image data includes left-eye image data for forming a left-eye image and right-eye image data for forming a right-eye image. Therefore, the imaging light P1 formed by the image source module 2 includes first imaging sub-light P11 corresponding to the left-eye image data and second imaging sub-light P12 corresponding to the right-eye image data. The first imaging sub-light P11 and the second imaging sub-light P12 are mixed together, and are collectively referred to as the imaging light P1.

The light adjustment apparatus 3 is configured to split the imaging light P1, and after split, the first imaging sub-light P11 and the second imaging sub-light P12 in the imaging light P1 are irradiated on the projection lens 4 in different directions, to form the first imaging sub-light P11 and the second imaging sub-light P12 that are spatially distributed. The first imaging sub-light P11 and the second imaging sub-light P12 that are spatially distributed are irradiated on different positions through the projection lens 4, to form the left-eye image and the right-eye image that are spatially distributed. When the left eye of an observer observes the left-eye image and the right eye of the observer observes the right-eye image, stereoscopic display effect can be achieved.

The image generation apparatus 1 of the foregoing structure can implement a stereoscopic display function. In addition, the light adjustment apparatus 3 is disposed on a side that is of the projection lens 4 and that is close to the image source module 2, and is located at a position close to the image source module 2. Therefore, the light adjustment apparatus 3 is close to a forming position of the imaging light P1, so that the light adjustment apparatus 3 has good beam splitting effect for the imaging light P1, and the image generation apparatus 1 can achieve good stereoscopic display effect.

In addition, a beam splitting object of the light adjustment apparatus 3 in the image generation apparatus 1 is the imaging light P1 formed by the image source module 2, so that problems such as an image resolution loss, image distortion, and crosstalk between the left-eye image and the right-eye image caused by a diffusion screen 110 can be avoided, to improve stereoscopic display effect.

In addition, the image generation apparatus 1 can achieve the foregoing technical effect by adding only the light adjustment apparatus 3. A structure is simple, costs are low, and impact on costs and a volume of the image generation apparatus 1 is small.

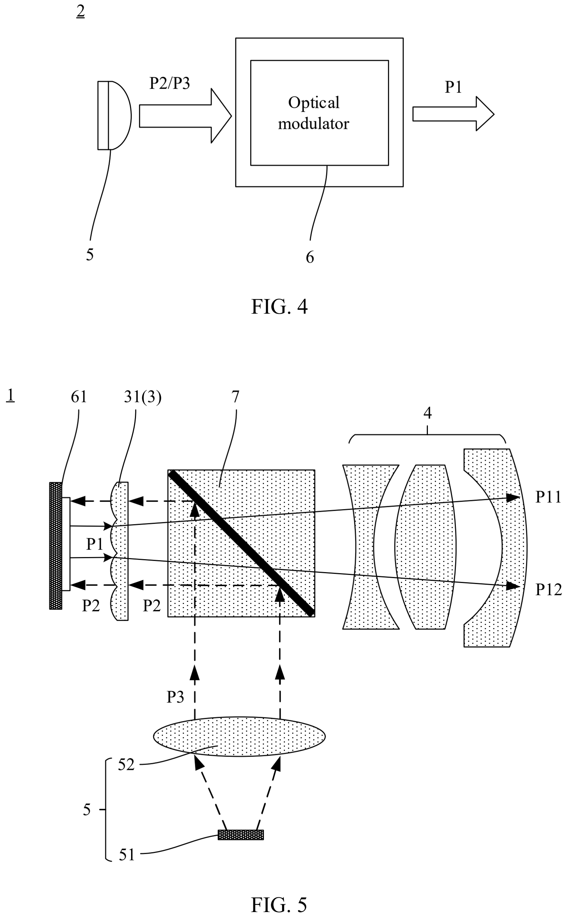

In some embodiments, as shown in FIG. 4, the image source module 2 in the image generation apparatus 1 includes a light source 5 and an optical modulator 6. The light source 5 is configured to generate an illumination light beam P3, and the illumination light beam P3 may be directly projected onto the optical modulator 6, or may form a first light beam P2 by using an intermediate structure (not shown in FIG. 4) such as a beam splitting device. The first light beam P2 is projected onto the optical modulator 6. The optical modulator 6 is configured to modulate, based on the image data, a light beam (the first light beam P2 or the illumination light beam P3) projected onto the optical modulator 6, to form the imaging light P1 including the image information.

The optical modulator 6 may be at least one of a liquid crystal on silicon (liquid crystal on silicon, LCoS), a digital micromirror device (digital micromirror device, DMD) 62, and a liquid crystal display (liquid crystal display, LCD).

The following describes the image generation apparatus 1 provided in this embodiment of this application by using examples in which the optical modulator 6 is separately the liquid crystal on silicon, the digital micromirror device, and the liquid crystal display.

In some embodiments, as shown in FIG. 5, the image generation apparatus 1 includes the light source 5, a polarizing beam splitter (polarizing beam splitter, PBS) 7, a liquid crystal on silicon 61, the light adjustment apparatus 3, and the projection lens 4.

The light source 5 is configured to generate the illumination light beam P3 irradiated on the polarizing beam splitter 7. The illumination light beam P3 may be natural light (non-polarized light), or may be a mixed light beam (polarized light) of P (parallel)-polarized light and S (perpendicular)-polarized light, or may be polarized light (one of P-polarized light and S-polarized light) applicable to the liquid crystal on silicon 61.

For example, the light source 5 may include a light-emitting element 51 and an optical element 52, and the light-emitting element 51 may be a light-emitting diode (light-emitting diode, LED) or a laser diode (Laser Diode, LD). The optical element 52 may be configured to focus and collimate a light beam generated by the light-emitting element 51, and may be further configured to perform polarization on the light beam generated by the light-emitting element 51, to form the illumination light beam P3 projected onto the polarizing beam splitter 7.

In this embodiment, an example in which the illumination light beam P3 generated by the light source 5 is natural light is used to describe the image generation apparatus 1 in this embodiment.

The polarizing beam splitter 7 is a prism that can implement polarizing beam splitting, and may split an incident light beam into S-polarized light and P-polarized light, and emit the S-polarized light and the P-polarized light in different directions for irradiation on different positions.

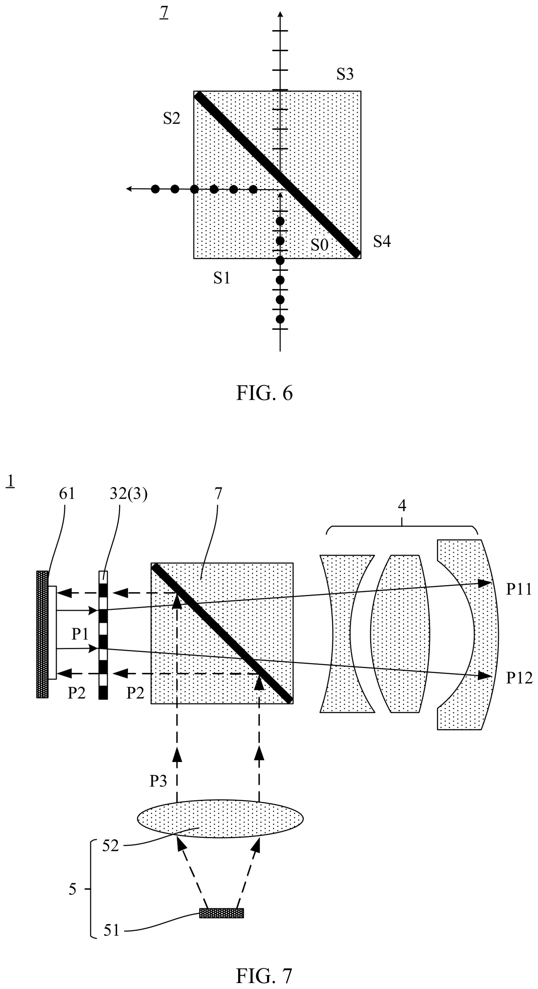

For example, as shown in FIG. 6, the polarizing beam splitter 7 has four outer side surfaces: a first side surface S1, a second side surface S2, a third side surface S3, and a fourth side surface S4. The polarizing beam splitter 7 further has a beam splitting surface S0, and the beam splitting surface S0 may reflect the S-polarized light and transmit the P-polarized light.

When the incident light beam including the P-polarized light and the S-polarized light is irradiated on the beam splitting surface S0 through the first side surface S1, the S-polarized light (represented by a dot symbol in FIG. 6) reflected by the beam splitting surface S0 is emitted from the second side surface S2, and the P-polarized light (represented by a perpendicular short line symbol in FIG. 6) transmitted by the beam splitting surface S0 is emitted from the third side surface S3, to implement a polarizing beam splitting function.

In this embodiment, the light source 5 is disposed opposite to the first side surface S1 of the polarizing beam splitter 7, the illumination light beam P3 generated by the light source 5 is irradiated on the beam splitting surface S0 through the first side surface S1, and the beam splitting surface S0 splits the illumination light beam P3 into the first light beam P2 and a second light beam, where the first light beam P2 is one of S-polarized light and P-polarized light, and the second light beam is the other of S-polarized light and P-polarized light. After splitting the illumination light beam P3 into the first light beam P2 and the second light beam, the polarizing beam splitter 7 emits the first light beam P2 and the second light beam in different directions for irradiation on different positions.

For example, in this embodiment, the first light beam P2 is S-polarized light, that is, a part that is of the illumination light beam P3 and that is reflected by the beam splitting surface S0, and the first light beam P2 is emitted through the second side surface S2. The second light beam is P-polarized light, that is, a part that is of the illumination light beam P3 and that is transmitted by the beam splitting surface S0, and the second light beam is emitted through the third side surface S3.

The liquid crystal on silicon 61 is disposed on a side opposite to the second side surface S2 of the polarizing beam splitter 7, and the first light beam P2 emitted through the second side surface S2 is irradiated on the liquid crystal on silicon 61.

The liquid crystal on silicon 61 is a reflective display chip 12, including a complementary metal oxide semiconductor (complementary metal oxide semiconductor, CMOS) substrate, a liquid crystal layer, and a glass substrate. The CMOS substrate includes a CMOS drive circuit and a metal reflector. The CMOS drive circuit is manufactured on a silicon wafer by using a CMOS process. After manufacturing of the CMOS drive circuit is completed, the silicon wafer is smoothed by using a grinding technology, and is plated with a metal layer used as the metal reflector. The glass substrate has a transparent electrode, the CMOS substrate and the glass substrate are disposed opposite to each other, and the liquid crystal layer is disposed between the CMOS substrate and the glass substrate.

The liquid crystal on silicon 61 includes a plurality of pixels arranged in an array, a plurality of pixel electrodes are disposed on the CMOS substrate in correspondence to the pixels, and a common electrode is disposed on the CMOS substrate or the glass substrate. A voltage is applied to the pixel electrode, so that a liquid crystal corresponding to the pixel at the liquid crystal layer can be controlled, to modulate light passing through the pixel.

In this embodiment, after the first light beam P2 is incident to the liquid crystal on silicon 61, the liquid crystal on silicon 61 modulates the first light beam P2 based on the image data to form the imaging light P1 including the image information. The image data may be the image data for implementing stereoscopic display based on the binocular disparity principle, and the image data includes the left-eye image data for forming the left-eye image and the right-eye image data for forming the right-eye image.

Some pixels in the liquid crystal on silicon 61 modulate the first light beam P2 based on the left-eye image data, to form the first imaging sub-light P11 including left-eye image information, and some pixels in the liquid crystal on silicon 61 modulate the first light beam P2 based on the right-eye image data, to form the second imaging sub-light P12 including right-eye image information. The first imaging sub-light P11 and the second imaging sub-light P12 are mixed together, and are collectively referred to as the imaging light P1.

For example, the plurality of pixels arranged in the array in the liquid crystal on silicon 61 include a plurality of left-eye pixels used to form the first imaging sub-light P11 and a plurality of right-eye pixels used to form the second imaging sub-light P12. A right-eye pixel and a left-eye pixel are disposed adjacently.

The imaging light P1 formed by the liquid crystal on silicon 61 is polarized light whose polarization direction is perpendicular to a polarization direction of the first light beam P2. In this specification, it is defined that the polarization direction of the first light beam P2 is a first polarization direction, the polarization direction of the imaging light P1 is a second polarization direction, and the first polarization direction and the second polarization direction are perpendicular to each other. In other words, the imaging light P1 may be one of P-polarized light and S-polarized light, and the first light beam P2 is the other of P-polarized light and S-polarized light.

In this embodiment, an example in which the first light beam P2 is S-polarized light and the imaging light P1 is P-polarized light is used to describe the image generation apparatus 1 in which the liquid crystal on silicon 61 is used. A person skilled in the art may perform adaptive adjustment based on the description in this specification for a case in which the first light beam P2 is P-polarized light and the imaging light P1 is S-polarized light.

It can be learned from the foregoing description that the imaging light P1 is P-polarized light, and the imaging light P1 is irradiated on the second side surface S2 of the polarizing beam splitter 7 and irradiated on the beam splitting surface S0 of the polarizing beam splitter 7 through the second side surface S2. The beam splitting surface S0 of the polarizing beam splitter 7 may transmit the P-polarized light. Therefore, the imaging light P1 may pass through the beam splitting surface S0 of the polarizing beam splitter 7, and is emitted from the third side surface S3 of the polarizing beam splitter 7 and irradiated on the projection lens 4. The projection lens 4 may be a short-focus lens, or may be a long-focus lens, and is configured to project the imaging light P1 emitted by the polarizing beam splitter 7 onto a preset position, for example, a position of the diffusion screen 110 or a reflection element.

To implement the stereoscopic display function of the image generation apparatus 1, the image generation apparatus 1 further includes the light adjustment apparatus 3. The light adjustment apparatus 3 is disposed between the polarizing beam splitter 7 and the liquid crystal on silicon 61. The first light beam P2 passes through the light adjustment apparatus 3 and is irradiated on the liquid crystal on silicon 61, and the imaging light P1 emitted by the liquid crystal on silicon 61 is irradiated on the light adjustment apparatus 3. The light adjustment apparatus 3 is configured to split the imaging light P1, and after split, the first imaging sub-light P11 and the second imaging sub-light P12 in the imaging light P1 are emitted in different directions, to form the first imaging sub-light P11 and the second imaging sub-light P12 that are spatially distributed.

Because the light adjustment apparatus 3 is disposed in an overlapping area of an illumination optical path (light source 5-polarizing beam splitter 7-liquid crystal on silicon 61) and an imaging optical path (liquid crystal on silicon 61-polarizing beam splitter 7-projection lens 4) of the image generation apparatus 1, the first light beam P2 passes through the light adjustment apparatus 3 once, and the imaging light P1 also passes through the light adjustment apparatus 3 once. To avoid a problem that stereoscopic display effect deteriorates due to impact of the light adjustment apparatus 3 on the first light beam P2, the light adjustment apparatus 3 in this embodiment may be a polarization light adjustment element. The polarization light adjustment element is applicable to performing beam splitting on polarized light in the second polarization direction, that is, the imaging light P1, and has no impact or has little impact on other light (for example, polarized light in the first polarization direction, such as the first light beam P2). In other words, the polarization light adjustment element allows the first light beam P2 to pass through normally.

In some embodiments, the polarization light adjustment element may be a polarization lens 31. The polarization lens 31 may be a micro lens array, or may be a lenticular lens array, and includes a lens array formed by a plurality of sub-lenses. One sub-lens is disposed in correspondence to at least two adjacent pixels. When light is emitted by the pixels corresponding to the sub-lens, the sub-lens may differentially refract the light emitted from different positions, and emit the light emitted by different pixels in different directions, to implement a beam splitting function. The pixels corresponding to the sub-lens include a left-eye pixel and a right-eye pixel that are adjacent to each other. Therefore, beam splitting of the imaging light P1 can be implemented through disposition of the lens array formed by the foregoing sub-lenses. After split, the first imaging sub-light P11 and the second imaging sub-light P12 in the imaging light P1 are emitted in different directions.

The polarization lens 31 is a polarization-dependent lens array, and the sub-lenses in the lens array refract only specific polarized light, and have no impact on other polarized light. In this embodiment, the polarization lens 31 is applicable to performing beam splitting on the P-polarized light through refraction, has no impact on or has little impact on the S-polarized light, and allows the S-polarized light to pass through normally. The foregoing features of the polarization lens 31 may be implemented by using a material such as a liquid crystal.

Refer to FIG. 5. A working principle of the image generation apparatus 1 is as follows.

After the polarizing beam splitter 7 performs beam splitting on the illumination light beam P3 emitted by the light source 5, the first light beam P2 and the second light beam emitted in different directions are formed, where the first light beam P2 is S-polarized light, and the second light beam is P-polarized light. The first light beam P2 emitted by the polarizing beam splitter 7 is irradiated on the polarization lens 31.

Because the polarization lens 31 is configured to split the P-polarized light through refraction, has no impact on or has little impact on the S-polarized light, and allows the S-polarized light to pass through normally, the first light beam P2 can pass through the polarization lens 31 normally, and the polarization lens 31 does not perform optical refraction on the first light beam P2.

The first light beam P2 passes through the polarization lens 31 and then is irradiated on the liquid crystal on silicon 61. After the liquid crystal on silicon 61 modulates the first light beam P2 based on the image data, the imaging light P1 is formed. The imaging light P1 includes the first imaging sub-light P11 formed by modulating the first light beam P2 by the left-eye pixel based on the left-eye image data, and the second imaging sub-light P12 formed by modulating the first light beam P2 by the right-eye pixel based on the right-eye image data. The imaging light P1, the first imaging sub-light P11, and the second imaging sub-light P12 are all P-polarized light.

The imaging light P1 (including the first imaging sub-light P11 and the second imaging sub-light P12 that are mixed together) emitted by the liquid crystal on silicon 61 is irradiated on the polarization lens 31. Because the polarization lens 31 can implement beam splitting on the P-polarized light through refraction, beam splitting may be performed on the imaging light P1. After split, the first imaging sub-light P11 and the second imaging sub-light P12 in the imaging light P1 are emitted in different directions, to form the first imaging sub-light P11 and the second imaging sub-light P12 that are spatially distributed.

Both the first imaging sub-light P11 and the second imaging sub-light P12 are P-polarized light, and may be emitted to the projection lens 4 through the polarizing beam splitter 7. The projection lens 4 projects the first imaging sub-light P11 and the second imaging sub-light P12 onto different positions, to form the left-eye image and the right-eye image that are spatially distributed. When the left eye of the observer observes the left-eye image and the right eye of the observer observes the right-eye image, stereoscopic display visual effect can be achieved.

In some other embodiments, as shown in FIG. 7, the polarization light adjustment element is a polarization grating 32. The polarization grating 32 is a barrier grating, and includes a grating array formed by a plurality of sub-gratings. One sub-grating is disposed in correspondence to at least two adjacent pixels. When light is emitted by the pixels corresponding to the sub-grating, the sub-grating may differentially block the light emitted from different positions, so that the light emitted by different pixels is emitted in different directions, to implement a beam splitting function. The pixel corresponding to the sub-grating includes a left-eye pixel and a right-eye pixel that are adjacent to each other. Therefore, beam splitting of the imaging light P1 can be implemented through disposition of the grating array formed by the foregoing sub-gratings. After split, the first imaging sub-light P11 and the second imaging sub-light P12 in the imaging light P1 are emitted in different directions.

The polarization grating 32 is a polarization-dependent grating array, and the sub-gratings in the grating array refract only specific polarized light, and have no impact on other polarized light. In this embodiment, the polarization grating 32 is applicable to implementing beam splitting on the P-polarized light through blocking, has no impact or has little impact on the S-polarized light, and allows the S-polarized light to pass through normally. For example, the polarization grating 32 may be a grating structure formed by using a P-polarizer, or may implement the foregoing functions by using a material such as a liquid crystal.

Refer to FIG. 7. A working principle of the image generation apparatus 1 is as follows.

After the polarizing beam splitter 7 performs beam splitting on the illumination light beam P3 emitted by the light source 5, the first light beam P2 and the second light beam emitted in different directions are formed, where the first light beam P2 is S-polarized light, and the second light beam is P-polarized light. The first light beam P2 emitted by the polarizing beam splitter 7 is irradiated on the polarization grating 32. Because the polarization grating 32 is configured to split the P-polarized light through blocking, has no impact or has little impact on the S-polarized light, and allows the S-polarized light to pass through normally, the first light beam P2 can pass through the polarization grating 32 normally, and the polarization grating 32 does not block the first light beam P2.

The first light beam P2 passes through the polarization grating 32 and then is irradiated on the liquid crystal on silicon 61. After the liquid crystal on silicon 61 modulates the first light beam P2 based on the image data, the imaging light P1 is formed. The imaging light P1 includes the first imaging sub-light P11 formed by modulating the first light beam P2 by the left-eye pixel based on the left-eye image data, and the second imaging sub-light P12 formed by modulating the first light beam P2 by the right-eye pixel based on the right-eye image data. The imaging light P1, the first imaging sub-light P11, and the second imaging sub-light P12 are all P-polarized light.

The imaging light P1 (including the first imaging sub-light P11 and the second imaging sub-light P12) emitted by the liquid crystal on silicon 61 is irradiated on the polarization grating 32. Because the polarization grating 32 can implement beam splitting on the P-polarized light through blocking, beam splitting may be performed on the imaging light P1. After split, the first imaging sub-light P11 and the second imaging sub-light P12 in the imaging light P1 are emitted in different directions, to form the first imaging sub-light P11 and the second imaging sub-light P12 that are spatially distributed.

Both the first imaging sub-light P11 and the second imaging sub-light P12 are P-polarized light, and may be emitted to the projection lens 4 through the polarizing beam splitter 7. The projection lens 4 projects the first imaging sub-light P11 and the second imaging sub-light P12 onto different positions, to form the left-eye image and the right-eye image that are spatially distributed. When the left eye of the observer observes the left-eye image and the right eye of the observer observes the right-eye image, stereoscopic display visual effect can be achieved.

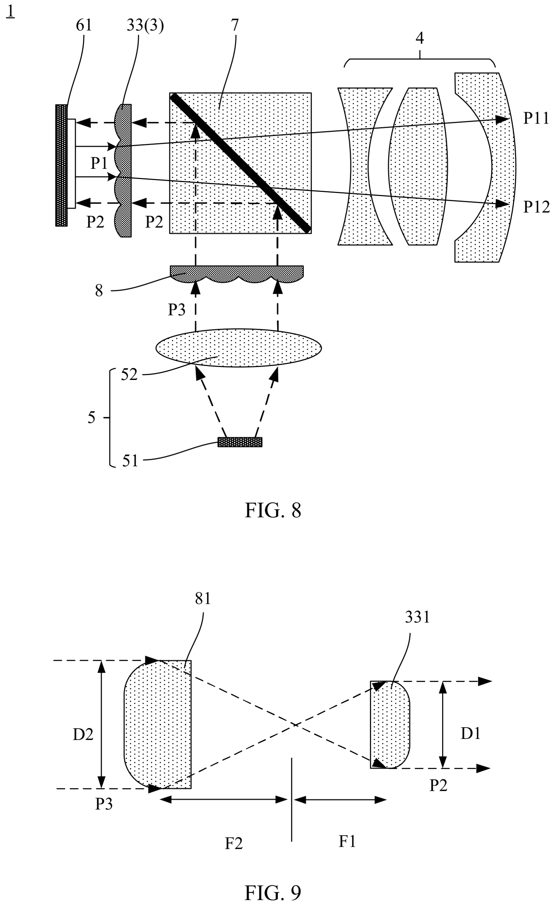

In some other embodiments, as shown in FIG. 8, the light adjustment apparatus 3 may be a first lens array 33 formed by a plurality of first lenses. The first lens array 33 is a non-polarization-dependent light adjustment element, and can implement beam splitting on polarized light and non-polarized light through refraction. Therefore, the light adjustment apparatus 3 may be configured to split the imaging light P1 emitted by the liquid crystal on silicon 61.

It can be learned from the foregoing description that, because the first lens array 33 is disposed in the overlapping area of the illumination optical path (light source 5-polarizing beam splitter 7-liquid crystal on silicon 61) and the imaging optical path (liquid crystal on silicon 61-polarizing beam splitter 7-projection lens 4) of the image generation apparatus 1, the first light beam P2 passes through the first lens array 33 once, and the imaging light P1 also passes through the first lens array 33 once. Therefore, the first light beam P2 is refracted by the first lens array 33 before entering the liquid crystal on silicon 61. As a result, an optical path difference is generated between light of the first light beam P2 incident to the liquid crystal on silicon 61. Consequently, uniformity of the first light beam P2 deteriorates, for example, a non-uniform light spot is generated, which affects imaging quality of the liquid crystal on silicon 61.

Based on this, the image generation apparatus 1 further includes a second lens array 8 formed by a plurality of second lenses. The second lens array 8 is also a non-polarization-dependent light adjustment element 130, is disposed between the light source 5 and the polarizing beam splitter 7, and is configured to: compensate for refraction of the first light beam P2 by the first lens array 33, and implement optical path compensation for the first light beam P2 incident to the liquid crystal on silicon 61, so that quality of light incident to the liquid crystal on silicon 61 is improved, and imaging quality of the liquid crystal on silicon 61 can be improved.

In some embodiments, both the first lens array 33 and the second lens array 8 are micro lens arrays or lenticular lens arrays.

Refer to FIG. 8. A working principle of the image generation apparatus 1 having the first lens array 33 and the second lens array 8 is as follows.

The illumination light beam P3 emitted by the light source 5 is irradiated on the second lens array 8. The second lens array 8 refracts the illumination light beam P3 (including the first light beam P2) for the first time and then emits the illumination light beam P3, and the illumination light beam P3 is irradiated on the polarizing beam splitter 7. After the polarizing beam splitter 7 performs beam splitting on the illumination light beam P3, the first light beam P2 and the second light beam emitted in different directions are formed, where the first light beam P2 is S-polarized light, and the second light beam is P-polarized light.

The first light beam P2 emitted by the polarizing beam splitter 7 is irradiated on the first lens array 33. The first lens array 33 refracts the first light beam P2 for the second time and then the first light beam P2 is irradiated on the liquid crystal on silicon 61. After the liquid crystal on silicon 61 modulates the first light beam P2 based on the image data, the imaging light P1 is formed. The imaging light P1 includes the first imaging sub-light P11 formed by modulating the first light beam P2 by the left-eye pixel based on the left-eye image data, and the second imaging sub-light P12 formed by modulating the first light beam P2 by the right-eye pixel based on the right-eye image data. The imaging light P1, the first imaging sub-light P11, and the second imaging sub-light P12 are all P-polarized light.

The imaging light P1 (including the first imaging sub-light P11 and the second imaging sub-light P12 that are mixed together) emitted by the liquid crystal on silicon 61 is irradiated on the first lens array 33. The first lens array 33 implements beam splitting on the imaging light P1 through refraction. After split, the first imaging sub-light P11 and the second imaging sub-light P12 in the imaging light P1 are emitted in different directions, to form the first imaging sub-light P11 and the second imaging sub-light P12 that are spatially distributed.

Both the first imaging sub-light P11 and the second imaging sub-light P12 are P-polarized light, and may be emitted to the projection lens 4 through the polarizing beam splitter 7. The projection lens 4 projects the first imaging sub-light P11 and the second imaging sub-light P12 onto different positions, to form the left-eye image and the right-eye image that are spatially distributed. When the left eye of the observer observes the left-eye image and the right eye of the observer observes the right-eye image, stereoscopic display visual effect can be achieved.

In the foregoing process, the first refraction of the first light beam P2 by the second lens array 8 may compensate for the optical path difference generated due to the second refraction of the first light beam P2 by the first lens array 33, to improve quality of a light beam incident to the liquid crystal on silicon 61, and improve imaging effect of the liquid crystal on silicon 61.

Refer to FIG. 9. In some embodiments, the first lens array 33 and the second lens array 8 satisfy:

$$D1/D2=F1/F2$$

D1 is an aperture of a first lens 331 in the first lens array 33, F1 is a focal length of the first lens 331 in the first lens array 33, D2 is an aperture of a second lens 81 in the second lens array 8, and F2 is a focal length of the second lens 81 in the second lens array 8.

As shown in FIG. 9, when the first lens array 33 and the second lens array 8 use the foregoing design, the second lens array 8 can compensate for the optical path difference generated due to refraction of the first light beam P2 by the first lens array 33, to improve quality of the light beam incident to the liquid crystal on silicon 61. In this way, imaging effect of the liquid crystal on silicon 61 is improved.

In some embodiments, the first lens 331 and the second lens 81 are same lenses, and the first lens array 33 and the second lens array 8 are of a same structure.

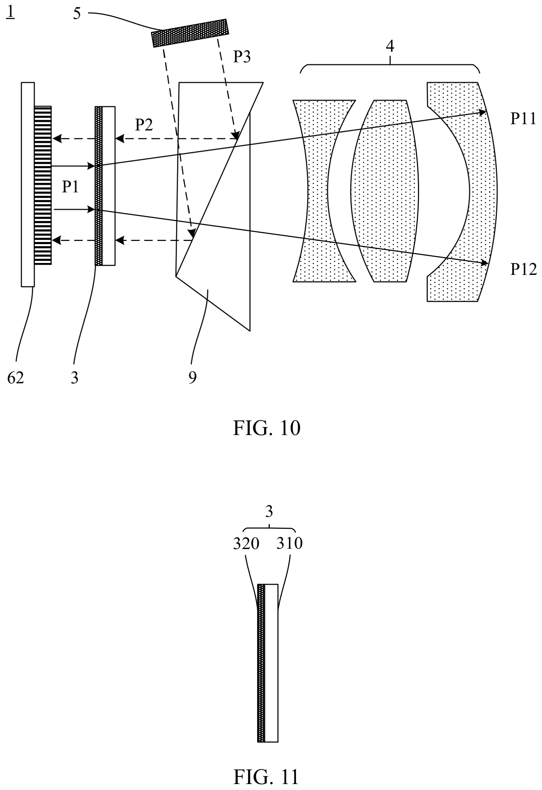

In some embodiments, as shown in FIG. 10, the image generation apparatus 1 includes the image source module 2, the light adjustment apparatus 3, and the projection lens 4. The image source module 2 includes the light source 5, a total internal reflection prism (TIR prism) 9, and the digital micromirror device 62. The light source 5 is configured to generate the illumination light beam P3 irradiated on the total internal reflection prism 9. For details about the light source 5, refer to the foregoing related content. Details are not described herein again.

The total internal reflection prism 9 plays a role of steering and eliminating stray light in the image source module 2. The total internal reflection prism 9 is disposed between the digital micromirror device 62 and the light source 5, and is configured to reflect a part or all of the illumination light beam P3 emitted by the light source 5, to form the first light beam P2 irradiated on the digital micromirror device 62. The total internal reflection prism 9 also allows the imaging light P1 formed by the digital micromirror device 62 to be irradiated on the projection lens 4 through the total internal reflection prism 9.

The total internal reflection prism 9 is disposed, so that quality of a light beam incident to the digital micromirror device 62 can be improved, and disposition positions of the light source 5, the digital micromirror device 62, and the projection lens 4 in the image generation apparatus 1 can be optimized. In this way, a structure of the image generation apparatus 1 is more compact, which facilitates a miniaturization design.

In some embodiments, the total internal reflection prism 9 may be replaced with another reflection prism having a same function, provided that the another reflection prism can reflect the illumination light beam P3 emitted by the light source 5 to form the first light beam P2 irradiated on the digital micromirror device 62, and can transmit the imaging light P1 formed by the digital micromirror device 62.

The digital micromirror device 62 receives the first light beam P2, and modulates the first light beam P2 based on the image data to form the imaging light P1 including the image information. Similar to the liquid crystal on silicon 61, the digital micromirror device 62 is a reflective display chip 12 based on a CMOS process. A difference lies in that the digital micromirror device 62 is a micro-electrical-mechanical system (micro-electrical-mechanical system, MEMS) for electronic input and optical output, and includes a CMOS substrate and a plurality of micromirrors arranged on the CMOS substrate in an array. One micromirror corresponds to one pixel. A quantity of micromirrors in the digital micromirror device 62 is related to resolution of the digital micromirror device 62.

In the digital micromirror device 62, the micromirror is a reflection mirror that can be flipped, and flipping of the micromirror is controlled by a digital drive signal from the CMOS substrate. Flipping angles of the micromirrors are controlled, so that the micromirrors can face different directions, and the micromirrors facing different directions can make reflection directions of incident light different. When reflected light of the micromirror is projected onto the projection lens 4, one pixel in a picture may be illuminated. When reflected light of the micromirror is not projected onto the projection lens 4, one pixel in a picture may be turned off. Therefore, flipping of the micromirrors in the micromirror array is controlled, so that the first light beam P2 can be modulated. It can also be learned from the foregoing description of the digital micromirror device 62 that the digital micromirror device 62 does not change a polarization state of the incident light.

In this embodiment, after the first light beam P2 is incident to the digital micromirror device 62, the digital micromirror device 62 modulates the first light beam P2 based on the image data to form the imaging light P1 including the image information. The image data may be the image data for implementing stereoscopic display based on the binocular disparity principle, and the image data includes the left-eye image data for forming the left-eye image and the right-eye image data for forming the right-eye image.

Some pixels (micromirrors) in the digital micromirror device 62 modulate the first light beam P2 based on the left-eye image data, to form the first imaging sub-light P11 including left-eye image information, and some pixels (micromirrors) in the digital micromirror device 62 modulate the first light beam P2 based on the right-eye image data, to form the second imaging sub-light P12 including right-eye image information. The first imaging sub-light P11 and the second imaging sub-light P12 are mixed together, and are collectively referred to as the imaging light P1.

For example, a plurality of pixels (micromirrors) arranged in an array in the digital micromirror device 62 include a plurality of left-eye pixels (micromirrors) used to form the first imaging sub-light P11, and a plurality of right-eye pixels (micromirrors) used to form the second imaging sub-light P12. A right-eye pixel (micromirror) and a left-eye pixel (micromirror) are disposed adjacently.

The light adjustment apparatus 3 is configured to split the imaging light P1, and after split, the first imaging sub-light P11 and the second imaging sub-light P12 in the imaging light P1 are projected onto the projection lens 4 in different directions. The projection lens 4 may be a short-focus lens or a long-focus lens, and is configured to project the first imaging sub-light P11 and the second imaging sub-light P12 onto a preset position, for example, a position of the diffusion screen or a reflection element.

To improve beam splitting effect of the light adjustment apparatus 3 for the imaging light P1, the light adjustment apparatus 3 needs to be disposed close to the forming position of the imaging light P1 to a greatest extent. In this embodiment, the image generation apparatus is disposed between the total internal reflection prism 9 and the digital micromirror device 62, that is, an overlapping area of an illumination optical path and an imaging optical path of the image generation apparatus 1.

In the image generation apparatus 1 of the foregoing structure, the first light beam P2 passes through the light adjustment apparatus 3 once, and the imaging light P1 also passes through the light adjustment apparatus 3 once. To avoid a problem that stereoscopic display effect deteriorates due to impact of the light adjustment apparatus 3 on the first light beam P2, in this embodiment, the first light beam P2 is polarized light whose polarization direction is a first polarization direction. Refer to FIG. 11. The light adjustment apparatus 3 includes a polarization light adjustment element 310 applicable to polarized light in a second polarization direction, where the first polarization direction and the second polarization direction are perpendicular to each other. In other words, the first light beam P2 is one of P-polarized light and S-polarized light, and the polarized light to which the polarization light adjustment element 310 is applicable is the other of P-polarized light and S-polarized light.

The polarization light adjustment element 310 can be configured to split the polarized light in the second polarization direction, but has no impact or has little impact on other light (for example, the polarized light in the first polarization direction). In other words, the polarization light adjustment element 310 allows the first light beam P2 to pass through normally, so that impact of the polarization light adjustment element 310 on the first light beam P2 can be avoided.

In addition, because the digital micromirror device 62 does not change the polarization state of the incident light, the light adjustment apparatus 3 further includes a polarization conversion element 320 disposed on a side that is of the polarization light adjustment element 310 and that is close to the digital micromirror device 62. The polarization conversion element 320 is configured to convert the imaging light P1 into polarized light in the second polarization direction, so that the polarization light adjustment element 310 can split the imaging light P1.

In some embodiments, the polarization light adjustment element 310 may be a polarization grating or a polarization lens. For descriptions of the polarization grating and the polarization lens, refer to the foregoing related content. Details are not described herein again.

In some embodiments, the polarization conversion element 320 is a quarter-wave plate. The quarter-wave plate is also referred to as a "quarter-phase retarder", and is a birefringent single crystal wave plate of a specific thickness. When light is incident from a normal direction and passes through the quarter-wave plate, a phase difference between ordinary light (o-light) and extraordinary light (e-light) is equal to $\pi/2$ or an odd-integer multiple of $\pi/2$. After passing through the quarter-wave plate twice, the P-polarized light may be converted into the S-polarized light; and after passing through the quarter-wave plate twice, the S-polarized light may be converted into the P-polarized light.

In some embodiments, the quarter-wave plate may alternatively be replaced with a one-eighth wave plate, and effect of two one-eighth wave plates is similar to effect of one quarter-wave plate.

Refer to FIG. 10. A working principle of the image generation apparatus 1 includes the following.

After passing through the total internal reflection prism 9, the first light beam P2 emitted by the light source 5 is irradiated on the polarization light adjustment element 310 in the light adjustment apparatus 3, where the first light beam P2 is polarized light in the first polarization direction. Because the polarization light adjustment element 310 is configured to split the polarized light in the second polarization direction, has no impact on or has little impact on the polarized light in the first polarization direction, and allows the polarized light in the first polarization direction to pass through normally, the first light beam P2 can pass through the polarization light adjustment element 310 normally.

The first light beam P2 passes through the polarization light adjustment element 310 and then is irradiated on the polarization conversion element 320, and is irradiated on the digital micromirror device 62 through the polarization conversion element 320. The digital micromirror device 62 modulates the first light beam P2 based on the image data to form the imaging light P1. The imaging light P1 emitted by the digital micromirror device 62 is irradiated on the polarization conversion element 320, and is irradiated on the polarization conversion element 320 through the polarization light adjustment element 310.

After passing through the polarization conversion element 320 twice (first light beam P2-polarization conversion element 320-imaging light P1-polarization conversion element 320), the polarized light in the first polarization direction is converted into the polarized light in the second polarization direction. Therefore, the imaging light P1 is converted into the polarized light in the second polarization direction after passing through the polarization conversion element 320.

The imaging light P1 is irradiated on the polarization light adjustment element 310, and the polarization light adjustment element 310 can split the polarized light in the second polarization direction. Therefore, beam splitting may be performed on the imaging light P1. After split, the first imaging sub-light P11 and the second imaging sub-light P12 in the imaging light P1 are emitted in different directions, to form the first imaging sub-light P11 and the second imaging sub-light P12 that are spatially distributed.

The first imaging sub-light P11 and the second imaging sub-light P12 are emitted to the projection lens 4. The projection lens 4 projects the first imaging sub-light P11 and the second imaging sub-light P12 onto different positions, to form the left-eye image and the right-eye image that are spatially distributed. When the left eye of the observer observes the left-eye image and the right eye of the observer observes the right-eye image, stereoscopic display visual effect can be achieved.

In some embodiments, the light adjustment apparatus 3 is disposed between the total internal reflection prism 9 and the projection lens 4, that is, disposed in an area that is in the imaging optical path and that does not overlap with the illumination optical path. In this case, the first light beam P2 may be natural light, or may be polarized light. The light adjustment apparatus 3 may include at least one of a polarization grating, a polarization lens, a slit grating, a micro lens array, and a lenticular lens array.

When the first light beam P2 is polarized light in the first polarization direction, the polarization grating and the polarization lens need to be able to be configured to split the polarized light in the first polarization direction.

In some embodiments, the image source module 2 in the image generation apparatus 1 includes the light source 5 and the digital micromirror device 62, and the light adjustment apparatus 3 may be disposed in the overlapping area of the illumination optical path and the imaging optical path in the image source module 2. In this case, the light adjustment apparatus 3 may be disposed with reference to the light adjustment apparatus 3 disposed between the total internal reflection prism 9 and the digital micromirror device 62 in the foregoing embodiment.

The light adjustment apparatus 3 may be alternatively disposed in the area that is in the imaging optical path of the image source module 2 and that does not overlap the illumination optical path. In this case, the light adjustment apparatus 3 may be disposed with reference to the light adjustment apparatus 3 disposed between the total internal reflection prism 9 and the projection lens 4 in the foregoing embodiment.

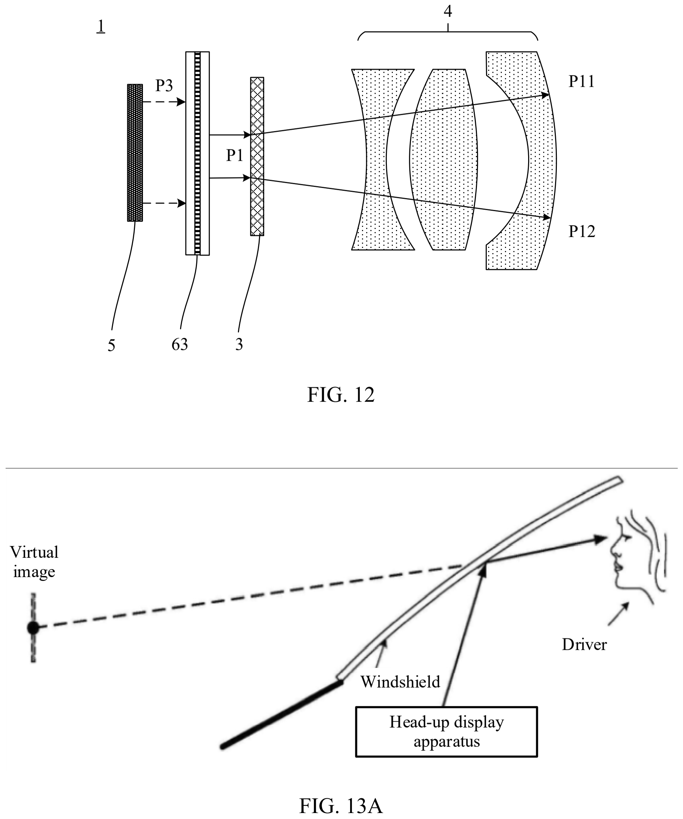

In some embodiments, as shown in FIG. 12, the image generation apparatus 1 includes the image source module 2, the light adjustment apparatus 3, and the projection lens 4. The image source module 2 includes the light source 5 and a liquid crystal display 63. The liquid crystal display 63 is of a transmissive liquid crystal structure. The light source 5 is disposed on one side of the liquid crystal display 63. The light adjustment apparatus 3 and the projection lens 4 are disposed on another side of the liquid crystal display 63. The light adjustment apparatus 3 is located between the projection lens 4 and the liquid crystal display 63.

The light source 5 is configured to generate the illumination light beam P3, and the illumination light beam P3 is irradiated on the liquid crystal display 63. The illumination light beam P3 may be natural light (non-polarized light), or may be a mixed light beam (polarized light) of P-polarized light and S-polarized light, or may be polarized light (one of P-polarized light and S-polarized light) applicable to the liquid crystal on silicon 61. For descriptions of the light source 5, refer to the foregoing related content. Details are not described herein again.

In this embodiment, an example in which the illumination light beam P3 generated by the light source 5 is natural light is used to describe the image generation apparatus 1 in this embodiment.

The illumination light beam P3 generated by the light source 5 is irradiated on the liquid crystal display 63. The liquid crystal display 63 includes a first substrate and a second substrate that are disposed opposite to each other, and a liquid crystal layer disposed between an array substrate and an aligned substrate. The liquid crystal display 63 includes a plurality of pixels arranged in an array, a plurality of pixel electrodes are disposed on the array substrate in correspondence to the pixels, and a common electrode is disposed on the array substrate or the aligned substrate. A voltage is applied to the pixel electrode, so that a liquid crystal corresponding to the pixel at the liquid crystal layer can be controlled, to modulate light passing through the pixel.

In this embodiment, after the illumination light beam P3 is incident to the liquid crystal display 63, the liquid crystal display 63 modulates the illumination light beam P3 based on the image data to form the imaging light P1 including the image information. The image data may be the image data for implementing stereoscopic display based on the binocular disparity principle, and the image data includes the left-eye image data for forming the left-eye image and the right-eye image data for forming the right-eye image.

Some pixels in the liquid crystal display 63 modulate the illumination light beam P3 based on the left-eye image data, to form the first imaging sub-light P11 including left-eye image information, and some pixels in the liquid crystal display 63 modulate the illumination light beam P3 based on the right-eye image data, to form the second imaging sub-light P12 including right-eye image information. The first imaging sub-light P11 and the second imaging sub-light P12 are mixed together, and are collectively referred to as the imaging light P1.

For example, the plurality of pixels arranged in the array in the liquid crystal display 63 include a plurality of left-eye pixels used to form the first imaging sub-light P11 and a plurality of right-eye pixels used to form the second imaging sub-light P12. A right-eye pixel and a left-eye pixel are disposed adjacently.

The imaging light P1 formed by the liquid crystal display 63 is projected onto the light adjustment apparatus 3. The imaging light P1 is polarized light in a first polarization direction, for example, P-polarized light or S-polarized light. The light adjustment apparatus 3 is configured to split the imaging light P1, and after split, the first imaging sub-light P11 and the second imaging sub-light P12 in the imaging light P1 are projected onto the projection lens 4 in different directions. The light adjustment apparatus 3 includes at least one of a polarization grating, a polarization lens, a slit grating, a micro lens array, and a lenticular lens array, where both the polarization grating and the polarization lens can be configured to split the polarized light in the first polarization direction.

For a working principle of the light adjustment apparatus 3, refer to the foregoing description. Details are not described herein again.

In the foregoing embodiments, the example in which the imaging light P1 includes the first imaging sub-light P11 and the second imaging sub-light P12 is used to describe the image generation apparatus 1 provided in this embodiment of this application. However, embodiments of this application are not limited thereto.

In some embodiments, the imaging light P1 includes at least two imaging sub-light pairs, each imaging sub-light pair includes the first imaging sub-light P11 and the second imaging sub-light P12, and the first imaging sub-light P11 and the second imaging sub-light P12 in each imaging sub-light pair can form a binocular disparity image for implementing stereoscopic display. Each of the imaging sub-light pairs is separately used to form one stereoscopic displaying viewing point.

The light adjustment apparatus 3 may project different imaging sub-light pairs onto the projection lens 4 in different directions, and project first imaging sub-light P11 and second imaging sub-light P12 in a same imaging sub-light pair onto the projection lens 4 in different directions. In this design, a plurality of viewing points that are spatially distributed can be formed. In this way, observers at different positions can simultaneously see the left-eye image and the right-eye image, to implement the stereoscopic display function, and expand a stereoscopic display viewing angle of the image generation apparatus 1.

The image generation apparatus 1 provided in this embodiment of this application may be used in an audio and video entertainment scenario and an assisted driving scenario. During specific application, the image generation apparatus 1 may be used independently, or may be integrated into another device as a component.

For example, in a possible application scenario, the image generation apparatus in this embodiment of this application is integrated into a head-up display (head-up display, HUD) apparatus. Refer to FIG. 13A.

FIG. 13A is described by using an example in which the head-up display apparatus is mounted in a transportation means. The head-up display apparatus may project navigation information, instrument information, and the like onto a driver's front field of view, to prevent the driver from looking down to view the information, so that driving safety is not affected. After an image projected by the head-up display apparatus is reflected by a windshield, a virtual image is formed outside the transportation means. A type of the head-up display apparatus includes but is not limited to a windshield (Windshield, W)-HUD, augmented reality head-up display (AR-HUD), or the like.

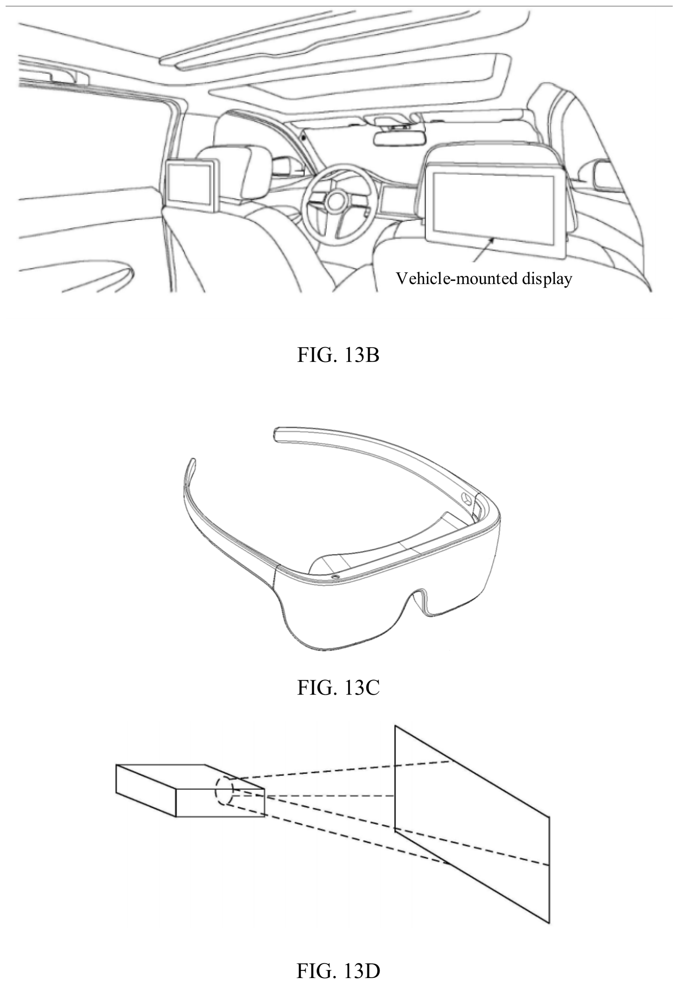

In another possible implementation, the image generation apparatus in this embodiment of this application is integrated into a vehicle-mounted display. Refer to FIG. 13B. The vehicle-mounted display may be mounted at the rear of a seat of the transportation means, a front passenger seat, or the like. A position at which the vehicle-mounted display is mounted is not limited in this application.

In still another possible application scenario, the image generation apparatus in this embodiment of this application is integrated into a near-eye display (Near-Eye Display, NED) device. The NED device may be, for example, an AR device or a VR device. The AR device may include but is not limited to AR glasses or an AR helmet, and the VR device may include but is not limited to VR glasses or a VR helmet. Refer to FIG. 13C. The AR glasses are used as an example. A user may wear an AR glasses device to play a game, watch a video, participate in a virtual conference, perform video shopping, or the like.

In still another possible application scenario, the image generation apparatus in this embodiment of this application is integrated into a projector. Refer to FIG. 13D. The projector may project an image onto a wall or a projection screen.

The foregoing application scenarios are merely examples. The image generation apparatus 1 provided in this application may be further used in another possible scenario, for example, a medical device. This is not limited in this application.

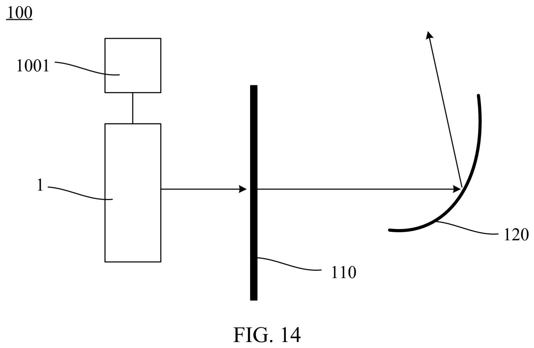

An embodiment of this application further provides a display device. As shown in FIG. 14, the display device 100 includes a processor 1001 and the image generation apparatus 1 in the foregoing embodiment. The processor 1001 is configured to control the image generation apparatus 1 to form imaging light.

The display device 100 provided in this embodiment of this application may be a head-up display apparatus, a vehicle-mounted display, a near-eye display device, a projector, a medical device, or the like mentioned in the foregoing application scenarios, or may be a display or the like integrated into a smart household appliance device, or may be a web television, a smart television, or an Internet protocol television (IPTV), or may be integrated into the web television, the smart television, or the Internet protocol television.

In some embodiments, the display device 100 further includes a diffusion screen 110. The diffusion screen 110 is disposed on a light output side of the image generation apparatus 1, and is configured to: receive the imaging light emitted by the image generation apparatus 1 and perform imaging. The first imaging sub-light and the second imaging sub-light may form, on the diffusion screen 110, a stereoscopic display viewing point that matches a human eye pupillary distance.

In addition, the diffusion screen 110 may improve uniformity of an imaging picture through scattering effect and a structure of the diffusion screen 110. In addition, the diffusion screen 110 may be configured to perform angle diffusion on the stereoscopic display viewing point, to increase a stereoscopic display viewing angle.

In this embodiment, the diffusion screen 110 may be a reflective diffusion screen or a transmissive diffusion screen.

In some embodiments, the display device 100 further includes a first reflection element 120. The first reflection element 120 may be disposed behind the diffusion screen 110, and is configured to reflect an imaging pattern on the diffusion screen 110 to a preset position.

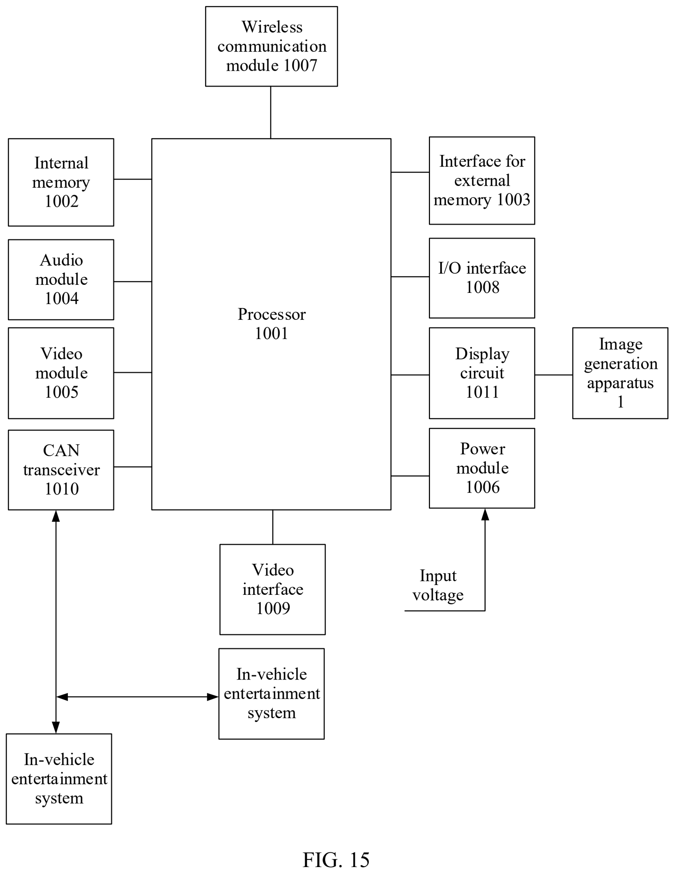

FIG. 15 is a diagram of a display device 100 according to an embodiment of this application.

As shown in FIG. 15, a circuit in the display device 100 mainly includes a processor 1001, an internal memory 1002, an interface for external memory 1003, an audio module 1004, a video module 1005, a power module 1006, a wireless communication module 1007, an I/O interface 1008, a video interface 1009, a controller area network (Controller Area Network, CAN) transceiver 1010, a display circuit 1011, and any one of the foregoing image generation apparatuses 1. The processor 1001 may be connected to a peripheral element of the processor 1001 through a bus, for example, the internal memory 1002, the interface for external memory 1003, the audio module 1004, the video module 1005, the power module 1006, the wireless communication module 1007, the I/O interface 1008, the video interface 1009, the CAN transceiver 1010, and the display circuit 1011.

The processor 1001 may be referred to as a front-end processor. The processor 1001 may include one or more processing units. For example, the processor 1001 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

A memory may be further disposed in the processor 1001, and is configured to store instructions and data, for example, store an operating system and an AR Creator software package of the display device 100. In some embodiments, the memory in the processor 1001 is a cache. The memory may store instructions or data just used or cyclically used by the processor 1001. If the processor 1001 needs to use the instructions or the data again, the processor 1001 may directly invoke the instructions or the data from the memory. This avoids repeated access, reduces waiting time of the processor 1001, and improves system efficiency.

In addition, if the display device 100 in this embodiment is mounted on a transportation means, functions of the processor 1001 may be implemented by a domain controller on the transportation means.

In some embodiments, the display device 100 may further include a plurality of input/output (input/output, I/O) interfaces 1008 connected to the processor 1001. The interface 1008 may include but is not limited to an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The I/O interface 1008 may be connected to a device such as a mouse, a touchscreen, a keyboard, a camera, a speaker/horn, a microphone, or the like, or may be connected to a physical button (for example, a volume button, a brightness adjustment button, a power-on/power-off button, or the like) on the display device 100.

The internal memory 1002 may be configured to store computer-executable program code. The executable program code includes instructions. The memory 1002 may include a program storage area and a data storage area. The program storage area may store an operating system, an application required by at least one function (such as a call function, a time setting function, or an AR function), and the like. The data storage area may store data (such as a phone book and world time) created in a process of using the display apparatus, and the like. In addition, the internal memory 1002 may include a high-speed random access memory, or may include a non-volatile memory, for example, at least one magnetic disk storage device, a flash memory, or a universal flash storage (universal flash storage, UFS). The processor 1001 performs various function applications and data processing of the display device 100 by running the instructions stored in the internal memory 1002 and/or the instructions stored in the memory disposed in the processor 1001.

The interface for external memory 1003 may be configured to connect to an external memory (for example, a Micro SD card). The external memory may store data or program instructions as required. The processor 1001 may perform an operation such as reading or writing on the data or the program through the interface for external memory 1003.

The audio module 1004 is configured to convert digital audio information into an analog audio signal for output, and is also configured to convert analog audio input into a digital audio signal. The audio module 1004 may be further configured to encode and decode an audio signal, for example, perform voice playing or voice recording. In some embodiments, the audio module 1004 may be disposed in the processor 1001, or some function modules in the audio module 1004 are disposed in the processor 1001. The display apparatus may implement an audio function through the audio module 1004, the application processor, and the like.

The video interface 1009 may receive audio and video input externally, and may be specifically a high-definition multimedia interface (high-definition multimedia interface, HDMI), a digital visual interface (digital visual interface, DVI), a video graphics array (video graphics array, VGA), a display port (display port, DP), a low-voltage differential signaling (low-voltage differential signaling, LVDS) interface, or the like. The video interface 1009 may further output a video externally. For example, the display device 100 receives, through the video interface, video data sent by a navigation system or video data sent by a domain controller.

The video module 1005 may decode a video input by the video interface 1009, for example, perform H.264 decoding. The video module may further encode a video collected by the display device 100, for example, perform H.264 encoding on a video collected by an external camera. In addition, the processor 1001 may also decode the video input by the video interface 1009, and then output a decoded image signal to the display circuit 1011.

Further, if the display device 100 in this embodiment is mounted on the transportation means, the display device 100 further includes the CAN transceiver 1010, and the CAN transceiver 1010 may be connected to a CAN bus (CAN BUS) of a vehicle. Through the CAN bus, the display device 100 may communicate with an in-vehicle entertainment system (music, radio, and video modules), a vehicle status system, and the like. For example, a user may enable an in-vehicle music playing function by operating the display device 100. The vehicle status system may send vehicle status information (vehicle door, seat belt, and the like) to the display device 100 for display.

The display circuit 1011 and the image generation apparatus 1 jointly implement a function of displaying an image. The display circuit 1011 receives the image signal output by the processor 1001, processes the image signal, and inputs the processed image signal into the image generation apparatus 1 for imaging. The display circuit 1011 may further control an image displayed by the image generation apparatus 1, for example, control a parameter such as display brightness or contrast. The display circuit 1011 may include a drive circuit, an image control circuit, and the like.

In this embodiment, the video interface 1009 may receive input video data (or referred to as a video source), the video module 1005 performs decoding and/or digitization processing and outputs the image signal to the display circuit 1011, and the display circuit 1011 drives the image generation apparatus 1 to perform imaging based on the input image signal, so as to generate a visual image (emit imaging light).

The power module 1006 is configured to supply power to components such as the processor 1001 and the image generation apparatus 1 based on input power (for example, a direct current). The power module 1006 may include a rechargeable battery. In addition, the power module 1006 may be connected to a power supply module (for example, a power battery) of the vehicle, and the power supply module of the vehicle supplies power to the power module 1006 of the display device 100.

The wireless communication module 1007 may enable the display device 100 to perform wireless communication with the outside, and may provide wireless communication solutions such as a wireless local area network (wireless local area network, WLAN), a wireless fidelity (wireless fidelity, Wi‑Fi) network, Bluetooth (Bluetooth, BT), a global navigation satellite system (global navigation satellite system, GNSS), frequency modulation (frequency modulation, FM), a near-distance wireless communication (near-field communication, NFC) technology, and an infrared (infrared, IR) technology. The wireless communication module 1007 may be one or more components integrating at least one communication processing module. The wireless communication module 1007 receives an electromagnetic wave through an antenna, performs frequency modulation and filtering processing on an electromagnetic wave signal, and sends a processed signal to the processor 1001. The wireless communication module 1007 may further receive a to-be-sent signal from the processor 1001, perform frequency modulation and amplification on the signal, and convert the signal into an electromagnetic wave for radiation through the antenna.

In addition, in addition to being input through the video interface 1009, the video data decoded by the video module 1005 may alternatively be received in a wireless manner through the wireless communication module 1007 or read from the internal memory 1002 or the external memory. For example, the display device 100 may receive the video data from a terminal device or the in-vehicle entertainment system through a wireless local area network in the vehicle, and the display device 100 may further read audio and video data stored in the internal memory 1002 or the external memory.

In addition, a circuit schematic in this embodiment of this application does not constitute a specific limitation on the display device 100. In some other embodiments of this application, the display device 100 may include more or fewer components than those shown in the figure, or a combination of some components, or splits from some components, or a different component layout. The components shown in the figure may be implemented by hardware, software, or a combination of software and hardware.

In addition to the foregoing functions, the display device 100 may further provide a function of receiving a television broadcast. For example, the display device 100 may be integrated into a web television, a smart television, or an Internet protocol television (IPTV).

In addition, an embodiment of this application provides a transportation means, and the display device 100 in the foregoing embodiment is mounted on the transportation means. The transportation means further includes a second reflection element, and the second reflection element is configured to reflect, to a preset position, imaging light formed by the display device 100.

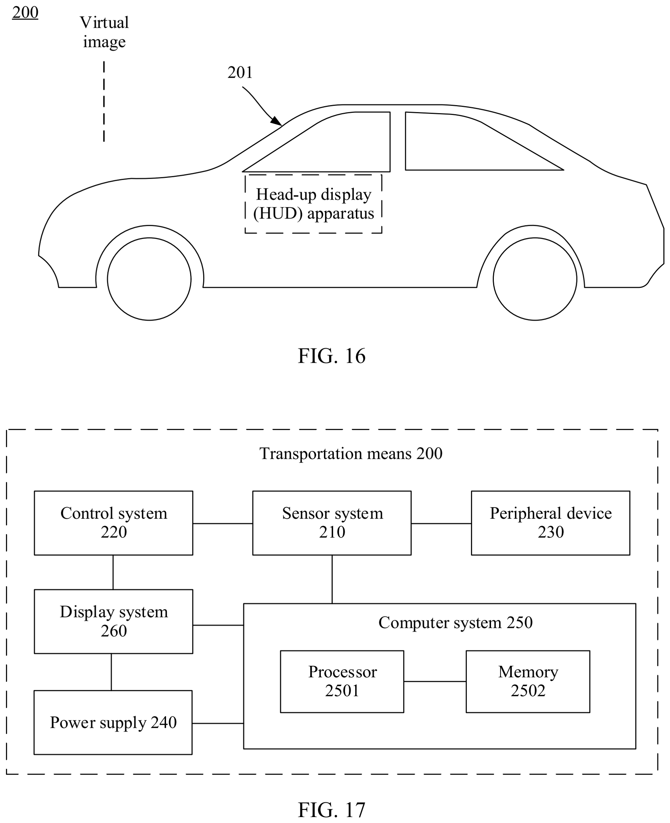

For example, as shown in FIG. 16, when the display device 100 is a head-up display apparatus mounted on the transportation means, the second reflection element may be windshield 201 of the transportation means. The windshield 201 is configured to receive imaging light emitted by the head-up display apparatus. The imaging light includes driving-related image information. The windshield 201 reflects the imaging light to eyes of a driver of the transportation means, so that the driver of the transportation means 200 sees a virtual image of the driving-related image information.

FIG. 17 is a functional diagram of a transportation means 200 according to an embodiment of this application. The transportation means may include various subsystems, for example, a sensor system 210, a control system 220, one or more peripheral devices 230 (one peripheral device is used as an example in the figure), a power supply 240, a computer system 250, and a display system 260 in the figure. The subsystems may communicate with each other. The display system 260 may include the display device 100 provided in an embodiment of this application. The transportation means may further include another function system, for example, an engine system that supplies power to the transportation means, or a cockpit. This is not limited herein in this application.

Specifically, the sensor system 210 may include a plurality of detection apparatuses. The detection apparatuses can sense measured information, and convert the sensed information into an electrical signal or other information in a required form based on a specific rule for output. The detection apparatuses may include a global positioning system (Global Positioning System, GPS), a vehicle speed sensor, an inertial measurement unit (Inertial Measurement Unit, IMU), a radar unit, a laser rangefinder, a camera apparatus, a wheel speed sensor, a steering sensor, a gear sensor, another element used for automatic detection, or the like. This is not limited in this application.

The control system 220 may include a plurality of elements, for example, a steering unit, a brake unit, a lighting system, an autonomous driving system, a map navigation system, a network time system, and an obstacle avoidance system shown in the figure. The control system 220 may receive information (for example, a vehicle speed and an inter-vehicle distance) sent by the sensor system 210, to implement functions such as autonomous driving and map navigation.

In some embodiments, the control system 220 may further include elements such as a throttle controller and an engine controller that are configured to control a traveling speed of a vehicle. This is not limited in this application.

The peripheral device 230 may include a plurality of elements, for example, a communication system, a touchscreen, a user interface, a microphone, and a speaker. The communication system is configured to implement network communication between the transportation means and another device other than the transportation means. During actual application, the communication system may implement network communication between the transportation means and the another device by using a wireless communication technology or a wired communication technology. The wired communication technology may mean that the vehicle communicates with the another device through a network cable, an optical fiber, or the like.

The power supply 240 represents a system used to provide power or energy for the vehicle, and may include but is not limited to a rechargeable lithium battery and a lead-acid battery. During actual application, one or more battery components in the power supply are configured to provide electrical energy or energy for starting the vehicle. A type and a material of the power supply are not limited in this application.

Several functions of the transportation means may be controlled and implemented by the computer system 250. The computer system 250 may include one or more processors 2501 (one processor is shown as an example in the figure) and a memory 2502 (which may also be referred to as a storage apparatus). During actual application, the memory 2502 is inside the computer system 250, or may be outside the computer system 250, for example, may be used as a cache in the transportation means. This is not limited in this application.

The processor 2501 may include one or more general-purpose processors, for example, a graphics processing unit (graphics processing unit, GPU). The processor 2501 may be configured to run a related program stored in the memory 2502 or instructions corresponding to a program, to implement a corresponding function of the vehicle. The processor 2501 may also be referred to as a domain controller.

The memory 2502 may include a volatile memory (volatile memory), for example, a RAM. The memory may alternatively include a non-volatile memory (non-volatile memory), for example, a ROM, a flash memory (flash memory), an HDD, or a solid-state drive SSD. The memory 2502 may alternatively include a combination of the foregoing types of memories. The memory 2502 may be configured to store a set of program code or instructions corresponding to program code, so that the processor 2501 invokes the program code or the instructions stored in the memory 2502 to implement a corresponding function of the vehicle. In this application, the memory 2502 may store a set of program code used for vehicle control. The processor 2501 may control safe driving of the vehicle by invoking the program code. A manner of implementing safe driving of the vehicle is specifically described in detail below in this application.

In some embodiments, in addition to storing the program code or the instructions, the memory 2502 may further store information such as a road map, a driving route, and sensor data. The computer system 250 may implement a vehicle-related function in combination with other elements in the diagram of the functional framework of the vehicle, such as the sensor and the GPS in the sensor system. For example, the computer system 250 may control a traveling direction, a traveling speed, or the like of the transportation means based on data input of the sensor system 210. This is not limited in this application.

The display system 260 may interact with another system in the transportation means. For example, the display system 260 may display navigation information sent by the control system 220, or play multimedia content sent by the computer system 250 and the peripheral device 230. For a specific structure of the display system 260, refer to the foregoing embodiment of the display apparatus. Details are not described herein again.

The four subsystems, to be specific, the sensor system 210, the control system 220, the computer system 250, and the display system 260, shown in this embodiment are merely examples, and do not constitute a limitation. During actual application, the transportation means may combine several elements in the vehicle based on different functions, to obtain subsystems with corresponding different functions. During actual application, the transportation means may include more or fewer subsystems or elements. This is not limited in this application.

The transportation means in embodiments of this application may be a known transportation means like a vehicle, an airplane, a ship, or a rocket, or may be a new transportation means that is to emerge in the future. The vehicle may be an electric vehicle, a fuel vehicle, or a hybrid power vehicle, for example, a pure electric vehicle, a range-extended electric vehicle, a hybrid electric vehicle, a fuel cell vehicle, or a new energy vehicle. This is not specifically limited in this application.

Technical effects that can be achieved by the display device and the transportation means provided in embodiments of this application are the same as technical effects that can be achieved by the image generation apparatus 1 in any one of the foregoing embodiments. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An image generation apparatus, comprising an image source module, a light adjustment apparatus, and a projection lens, wherein

   the image source module is configured to: form, based on image data, imaging light that comprises image information, and project the imaging light onto the light adjustment apparatus, wherein the imaging light comprises first imaging sub-light and second imaging sub-light, and the first imaging sub-light and the second imaging sub-light are respectively used to form a left-eye image and a right-eye image for implementing stereoscopic display;
   the light adjustment apparatus is configured to split the imaging light, and after split, the first imaging sub-light and the second imaging sub-light in the imaging light are projected onto the projection lens in different directions; and
   the projection lens is configured to project the first imaging sub-light and the second imaging sub-light.

2. The image generation apparatus according to claim 1, wherein the image source module comprises a light source, a liquid crystal on silicon, and a polarizing beam splitter;

   the light source is configured to provide an illumination light beam projected onto the polarizing beam splitter;
   the polarizing beam splitter is configured to: perform polarization splitting on the illumination light beam to form a first light beam, and project the first light beam onto the liquid crystal on silicon through the light adjustment apparatus, wherein a polarization direction of the first light beam is a first polarization direction;
   the liquid crystal on silicon is configured to: form the imaging light, and project the imaging light onto the light adjustment apparatus, wherein a polarization direction of the imaging light is a second polarization direction, and the first polarization direction and the second polarization direction are perpendicular to each other; and the light adjustment apparatus is configured to split the imaging light, and after split, the first imaging sub-light and the second imaging sub-light in the imaging light are projected onto the polarizing beam splitter in different directions, and are projected onto the projection lens through the polarizing beam splitter.

3. The image generation apparatus according to claim 2, wherein the light adjustment apparatus is a polarization light adjustment element, and the polarization light adjustment element is configured to: split polarized light in the second polarization direction, and allow polarized light in the first polarization direction to pass through.

4. The image generation apparatus according to claim 3, wherein the polarization light adjustment element comprises a polarization grating or a polarization lens.

5. The image generation apparatus according to claim 2, wherein the light adjustment apparatus is a first lens array, and the first lens array is configured to: split the imaging light through refraction, and refract the first light beam; and the image source module further comprises a second lens array, wherein the second lens array is disposed between the light source and the polarizing beam splitter, and is configured to compensate for an optical path difference generated due to refraction of the first light beam by the first lens array.

6. The image generation apparatus according to claim 5, wherein the first lens array comprises a plurality of first lenses arranged in an array, wherein an aperture of the first lens is D , and a focal length of the first lens is F1;

   the second lens array comprises a plurality of second lenses arranged in an array, wherein an aperture of the second lens is D2, and a focal length of the second lens is F2; and the first lens and the second lens satisfy: D1/D2=F1/F2.

7. The image generation apparatus according to claim 5 or 6, wherein the first lens array and the second lens array are of a same structure.

8. The image generation apparatus according to any one of claims 5 to 7, wherein both the first lens array and the second lens array are micro lens arrays or lenticular lens arrays.

9. The image generation apparatus according to claim 1, wherein the image source module comprises a light source, a reflection prism, and a digital micromirror device;

   the light source is configured to provide an illumination light beam projected onto the reflection prism;
   the reflection prism is configured to: reflect the illumination light beam to form a first light beam projected onto the digital micromirror device; and transmit the imaging light formed by the digital micromirror device;
   the digital micromirror device is configured to: modulate the first light beam based on the image data to form the imaging light; and project the imaging light onto the reflection prism, to project the imaging light onto the projection lens through the reflection prism; and
   the light adjustment apparatus is disposed between the reflection prism and the digital micromirror device, or between the reflection prism and the projection lens.

10. The image generation apparatus according to claim 9, wherein the light adjustment apparatus is disposed between the reflection prism and the digital micromirror device, and the illumination light beam is polarized light in a first polarization direction;

   the light adjustment apparatus comprises a polarization light adjustment element and a polarization conversion element, wherein the polarization light adjustment element is configured to: split polarized light in a second polarization direction, and allow polarized light in the first polarization direction to pass through, and the first polarization direction and the second polarization direction are perpendicular to each other; and
   the polarization conversion element is disposed on a side that is of the polarization light adjustment element and that is close to the digital micromirror device, and is configured to convert the imaging light into polarized light in the second polarization direction.

11. The image generation apparatus according to claim 10, wherein the polarization light adjustment element comprises a polarization grating or a polarization lens.

12. The image generation apparatus according to claim 10 or 11, wherein the polarization conversion element is a quarter-wave plate.

13. The image generation apparatus according to claim 9, wherein the light adjustment apparatus is disposed between the reflection prism and the projection lens, and the light adjustment apparatus comprises at least one of a polarization grating, a polarization lens, a slit grating, a micro lens array, and a lenticular lens array.

14. The image generation apparatus according to claim 1, wherein the image source module comprises a light source and a liquid crystal display;

the light source is configured to provide an illumination light beam projected onto the liquid crystal display;

the liquid crystal display is configured to: modulate the illumination light beam based on the image data to form the imaging light, and project the imaging light onto the light adjustment apparatus; and

the light adjustment apparatus is disposed between the liquid crystal display and the projection lens, and the light adjustment apparatus comprises at least one of a polarization grating, a polarization lens, a slit grating, a micro lens array, and a lenticular lens array.

15. The image generation apparatus according to any one of claims 1 to 14, wherein the imaging light comprises at least two imaging sub-light pairs, each imaging sub-light pair comprises the first imaging sub-light and the second imaging sub-light, and each of the imaging sub-light pairs is separately used to form one stereoscopic displaying viewing point; and the light adjustment apparatus is configured to split the imaging light, and after split, different imaging sub-light pairs in the imaging light are projected onto the projection lens in different directions, and first imaging sub-light and second imaging sub-light in a same imaging sub-light pair are projected onto the projection lens in different directions.

16. A display device, comprising a processor and the image generation apparatus according to any one of claims 1 to 15, wherein the processor is configured to control the image generation apparatus to form imaging light.

17. The display device according to claim 16, wherein the display device further comprises a diffusion screen and a first reflection element;

the diffusion screen is disposed on a light output side of the image generation apparatus, and is configured to: receive the imaging light and perform imaging; and

the first reflection element is configured to reflect imaging information on the diffusion screen to a preset position.

18. A transportation means, comprising the display device according to claim 16 or 17, wherein the display device is mounted on the transportation means.

19. The transportation means according to claim 18, wherein the transportation means further comprises a second reflection element, the display device is configured to project imaging light onto the second reflection element, and the second reflection element is configured to reflect the imaging light.

1000

FIG. 1

FIG. 2

1

Image
source
module

P1

P11

P12

2

3

4

FIG. 3

2

P2/P3

Optical
modulator

P1

5

6

FIG. 4

1    61    31(3)    7    4

P11

P1

P12

P2    P2

P3

52

5

51

FIG. 5

FIG. 6

FIG. 7

FIG. 8

FIG. 9

FIG. 10

FIG. 11

FIG. 12

FIG. 13A

Vehicle-mounted display

FIG. 13B

FIG. 13C

FIG. 13D

100

1001

1

110

120

FIG. 14

Wireless
communication
module 1007

Internal
memory
1002

Audio
module
1004

Video
module
1005

CAN
transceiver
1010

Processor
1001

Interface for
external
memory 1003

I/O interface
1008

Display
circuit
1011

Image
generation
apparatus
1

Power
module
1006

Video
interface
1009

Input
voltage

In-vehicle
entertainment
system

In-vehicle
entertainment
system

FIG. 15

200

Virtual image

201

Head-up display (HUD) apparatus

FIG. 16

Transportation means 200

| Control system 220 | Sensor system 210 | Peripheral device 230 |

Display system 260

Computer system 250

Processor 2501

Memory 2502

Power supply 240

FIG. 17

## INTERNATIONAL SEARCH REPORT

| International application No. |
|---|
| **PCT/CN2024/078126** |

**A. CLASSIFICATION OF SUBJECT MATTER**

G02B30/26(2020.01)i; G02B27/28(2006.01)i; G02B27/01(2006.01)i

According to International Patent Classification (IPC) or to both national classification and IPC

**B. FIELDS SEARCHED**

Minimum documentation searched (classification system followed by classification symbols)

IPC: G02B

Documentation searched other than minimum documentation to the extent that such documents are included in the fields searched

Electronic data base consulted during the international search (name of data base and, where practicable, search terms used)

CNABS; CNTXT; VEN; ENTXT; ENTXTC; CNKI: 立体, 三维, 投影, 投射, 抬头, 平视, 偏振, 偏光, 光栅, 透镜, 狭缝, 屏障, 棱镜, 分束, 分光, 微镜, 硅基, 硅上, 液晶, 3d, 3-d, stereo+, dmd, mems, lcos, pbs, polar+, split+, head+, up, display+, grating?, slit+, barrier+

**C. DOCUMENTS CONSIDERED TO BE RELEVANT**

| Category* | Citation of document, with indication, where appropriate, of the relevant passages | Relevant to claim No. |
|---|---|---|
| X | CN 114153066 A (FUTURUS TECHNOLOGY CO., LTD.) 08 March 2022 (2022-03-08) description, paragraphs [0003]-[0112], and figures 1-15 | 1, 14-19 |
| X | CN 115542644 A (HUAWEI TECHNOLOGIES CO., LTD.) 30 December 2022 (2022-12-30) description, paragraphs [0006]-[0168], and figures 1-18 | 1, 14-19 |
| Y | CN 114153066 A (FUTURUS TECHNOLOGY CO., LTD.) 08 March 2022 (2022-03-08) description, paragraphs [0003]-[0112], and figures 1-15 | 2, 9, 13, 15-19 |
| Y | CN 110133859 A (CORETRONIC CORP.) 16 August 2019 (2019-08-16) description, paragraphs [0005]-[0046], and figures 1-10C | 2, 9, 15-19 |
| Y | CN 110133860 A (CORETRONIC CORP.) 16 August 2019 (2019-08-16) description, paragraphs [0005]-[0040], and figures 1-8 | 9, 13, 15-19 |
| A | CN 111880360 A (DISNEY ENTERPRISES, INC.) 03 November 2020 (2020-11-03) entire document | 1-19 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 April 2024** | **04 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/078126** |

**C.    DOCUMENTS CONSIDERED TO BE RELEVANT**

| Category* | Citation of document, with indication, where appropriate, of the relevant passages | Relevant to claim No. |
| --- | --- | --- |
| A | TW 201535037 A (THE HONG KONG UNIVERSITY OF SCIENCE AND TECHNOLOGY et al.) 16 September 2015 (2015-09-16)<br>entire document | 1-19 |

**INTERNATIONAL SEARCH REPORT**
Information on patent family members

International application No.

**PCT/CN2024/078126**

| Patent document cited in search report | | | Publication date (day/month/year) | Patent family member(s) | | | Publication date (day/month/year) |
|---|---|---|---|---|---|---|---|
| CN | 114153066 | A | 08 March 2022 | None | | | |
| CN | 115542644 | A | 30 December 2022 | None | | | |
| CN | 110133859 | A | 16 August 2019 | None | | | |
| CN | 110133860 | A | 16 August 2019 | None | | | |
| CN | 111880360 | A | 03 November 2020 | None | | | |
| TW | 201535037 | A | 16 September 2015 | TW | I546610 | B | 21 August 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310485863